(19) **Europäisches Patentamt European Patent Office Office européen des brevets**

(11) **EP 4 704 311 A1**

(12) **EUROPEAN PATENT APPLICATION**
published in accordance with Art. 153(4) EPC

(43) Date of publication:
**04.03.2026 Bulletin 2026/10**

(21) Application number: **24796525.4**

(22) Date of filing: **19.02.2024**

(51) International Patent Classification (IPC):
*H02K 1/278* (2022.01)

(52) Cooperative Patent Classification (CPC):
**H02K 1/278**

(86) International application number:
**PCT/JP2024/005660**

(87) International publication number:
**WO 2024/224766 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.04.2023 JP 2023072563**

(71) Applicant: **Minebea Mitsumi Inc.**
**Kitasaku-gun, Nagano 3890293 (JP)**

(72) Inventors:
• **YAMADA, Takuji**
  **Kitasaku-gun, Nagano 389-0293 (JP)**
• **WATANABE, Toru**
  **Kitasaku-gun, Nagano 389-0293 (JP)**

(74) Representative: **Winter, Brandl - Partnerschaft mbB**
**Alois-Steinecker-Straße 22**
**85354 Freising (DE)**

(54) **ROTOR, MOTOR, AND ELECTRONIC APPARATUS**

(57) A rotor (6) includes a plurality of magnets (64) arranged in a circumferential direction (C) and a plurality of magnetic pole pieces (622). In the circumferential direction (C), the magnetic pole piece (622) is in contact with two adjacent magnets (64) of the plurality of magnets (64). A lateral surface of the magnetic pole piece (622) extending in the circumferential direction (C) includes a recessed part (622c) extending in a radial direction.

FIG. 3

EP 4 704 311 A1

**Description**

Technical Field

The present invention relates to a rotor, a motor, and an electronic apparatus.

Background Art

For example, a rotor including a plurality of permanent magnets (magnets) radially arranged around an output shaft (shaft) (for example, see Patent Document 1) is present.

Citation List

Patent Literature

Patent Document 1: JP 2004-26089 A

Summary of Invention

Technical Problem

However, the conventional rotor has room for further improvement in terms of reducing a cogging torque.

The present invention has been made in view of the above, and provides a rotor and the like capable of reducing a cogging torque.

Solution to Problem

In order to solve the above-described problems and achieve the object, a rotor according to the present invention includes: a plurality of magnets arranged in a circumferential direction; and a plurality of magnetic pole pieces, in which, in the circumferential direction, the magnetic pole pieces are in contact with two adjacent magnets of the plurality of magnets, and lateral surfaces of the magnetic pole pieces extending in the circumferential direction are provided with recessed parts extending in a radial direction.

In accordance with an aspect of a rotor and the like according to the present invention, a cogging torque can be reduced.

Brief Description of Drawings

FIG. 1 is a vertical cross-sectional view of a motor using a rotor according to a first embodiment, and is a vertical cross-sectional view taken along the arrow D-D in FIG. 2.
FIG. 2 is a horizontal cross-sectional view taken along the arrow B-B in FIG. 1.
FIG. 3 is a plan view illustrating a part of the rotor.

FIG. 4 is a plan view of a first magnetic body used for a rotor core illustrated in FIG. 2.
FIG. 5 is a plan view of a second magnetic body used for the rotor core illustrated in FIG. 2.
FIG. 6 is a cross-sectional view illustrating a part of the rotor and a part of a stator.
FIG. 7 is a cross-sectional view illustrating the same parts as the parts in FIG. 6, and is a plan view illustrating magnetic lines of force of each part.
FIG. 8 is a horizontal cross-sectional view of a motor using a rotor according to a first modified example of the first embodiment.
FIG. 9 is a perspective view of a rotor core included in the rotor illustrated in FIG. 9.
FIG. 10 is an exploded perspective view of the rotor core illustrated in FIG. 9.
FIG. 11 is an enlarged cross-sectional view of a part of FIG. 8.
FIG. 12 is a perspective view of a rotor core included in a rotor according to a second modified example of the first embodiment.
FIG. 13 is an exploded perspective view of the rotor core illustrated in FIG. 12.
FIG. 14 is a perspective view of a rotor core included in a rotor according to a third modified example of the first embodiment.
FIG. 15 is an exploded perspective view of the rotor core illustrated in FIG. 14.
FIG. 16 is a perspective view of a rotor core included in a rotor according to a fourth modified example of the first embodiment.
FIG. 17 is a perspective view of a rotor core included in a rotor according to a fifth modified example of the first embodiment.
FIG. 18 is a perspective view of a rotor core included in a rotor according to a sixth modified example of the first embodiment.
FIG. 19 is a perspective view of a rotor core included in a rotor according to a seventh modified example of the first embodiment.
FIG. 20 is a horizontal cross-sectional view of a motor using a rotor according to a second embodiment.
FIG. 21 is an enlarged cross-sectional view of a part of the rotor illustrated in FIG. 20.
FIG. 22 is a plan view of a motor using a rotor according to a third embodiment.
FIG. 23 is a perspective view of the motor illustrated in FIG. 22.
FIG. 24 is an enlarged plan view illustrating a part of the rotor and a stator illustrated in FIG. 22.
FIG. 25 is a cross-sectional view illustrating a part of the rotor and a part of the stator illustrated in FIG. 22.
FIG. 26 is a plan view of a part of a motor using a rotor according to a first modified example of the third embodiment.
FIG. 27 is a cross-sectional view illustrating the same parts as the parts in FIG. 26, and is a plan view illustrating magnetic lines of force of each part.

FIG. 28 is a plan view of a motor using a rotor according to a second modified example of the third embodiment.

FIG. 29 is a plan view illustrating a part of the motor illustrated in FIG. 28.

FIG. 30 is a plan view illustrating a part of the motor illustrated in FIG. 28, and is a plan view illustrating magnetic lines of force of each part.

Description of Embodiments

A rotor, a motor, and an electronic apparatus according to an embodiment are described below in detail with reference to the drawings. Note that the dimensional relationship between elements, the proportion of each of the elements, and the like in the drawings may differ from reality. Among the drawings, parts having mutually different dimensional relationships and proportions may be included.

First Embodiment

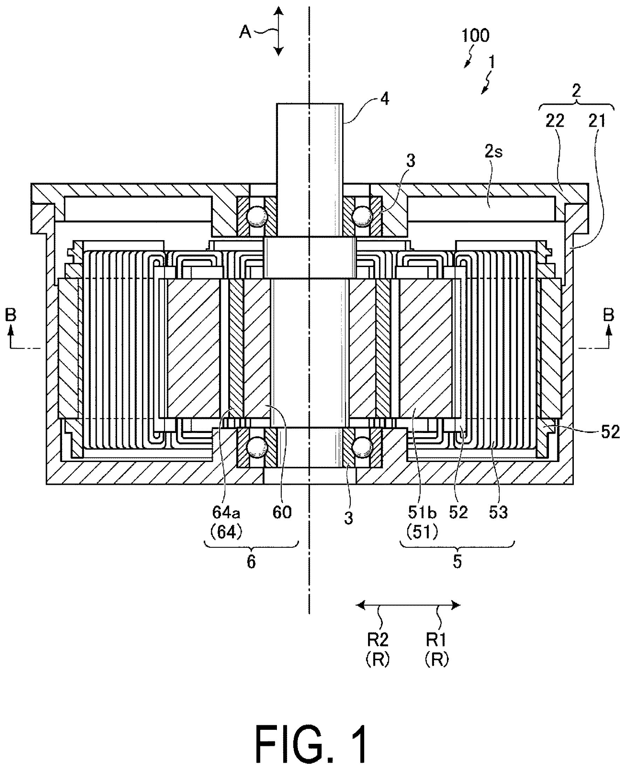

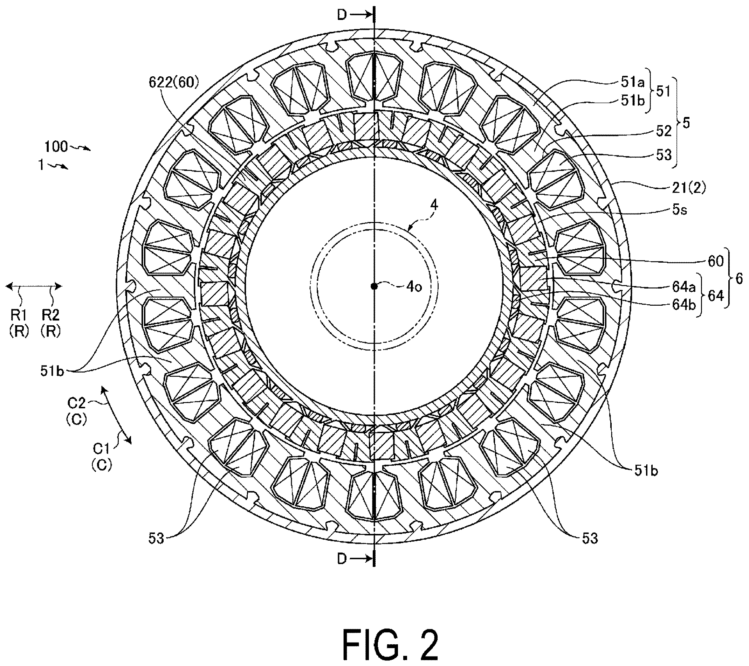

FIG. 1 is a vertical cross-sectional view of a motor 1 using a rotor 6 according to a first embodiment, and is a vertical cross-sectional view taken along the arrow D-D in FIG. 2. FIG. 2 is a horizontal cross-sectional view taken along the arrow B-B in FIG. 1. Note that in FIG. 2, × located at both sides of teeth 51b to be described below indicates omission of a winding wound around the teeth 51b and forming coils 53.

In the following description of the motor 1 using the rotor 6 according to the first embodiment, in order to facilitate understanding of directions, an extension direction of a shaft 4 to be described below is referred to as an axial direction A, a movement direction of the rotor 6 with respect to a stator 5 to be described below is referred to as a circumferential direction C, and a direction included in a plane orthogonal to the axial direction A, passing through an axial center 40 of the shaft 4, and orthogonal to the circumferential direction C is referred to as a radial direction R. In addition, one direction (for example, a counterclockwise direction) in the circumferential direction C is a rotation direction C1 of the rotor 6 and the shaft 4, and the other direction (for example, a clockwise direction) in the circumferential direction C is a reverse rotation direction C2.

The motor 1 according to the first embodiment is used for, for example, an electronic apparatus 100 such as an actuator or a moving object. More specifically, it is used for the electronic apparatus 100 used at home, such as a drive device of a moving body such as an electric vehicle or a compressor of an air conditioner. Of course, the motor 1 is used for other electronic apparatuses 100.

The motor 1 is, for example, of inner rotor type as described below, and when viewed from the axial direction A, the stator 5 is located outside the rotor 6 in the radial direction R, while the shaft 4 is located inside the rotor 6 in the radial direction R, with reference to the rotor 6. Therefore, in the motor 1 according to the present embodiment, the outside in the radial direction R is referred to as a stator side R1, and the inside in the radial direction R is referred to as an opposite side R2 to the stator 5. In FIGS. 1 and 2, the stator side in the radial direction R is indicated by R1, and the opposite side to the stator 5 in the radial direction R is indicated by R2. For ease of description, the shaft 4 is indicated by a solid line in FIG. 1, the shaft 4 is indicated by a virtual line in FIG. 2, and the shaft 4 is omitted in the other drawings.

The motor 1 according to the first embodiment is an electric motor for converting electric energy from, for example, a power source into a driving force rotating in the circumferential direction C of the shaft 4. The motor 1 according to the present embodiment is a spoke-type interior permanent magnet (IPM) motor. The IPM motor has magnets 64 embedded inside a rotor core 60, and is also referred to as an embedded magnet type motor. As illustrated in FIG. 2, the motor 1 according to the present embodiment is what is called a spoke-type IPM motor, In a cross section orthogonal to the axial direction A, a plurality of magnets 64 are radially arranged inside the rotor core 60 with the longitudinal direction of the magnets 64 having a rectangular shape being arranged along the radial direction R.

As illustrated in FIG. 1, for example, the motor 1 includes a housing 2, bearings 3, the shaft 4, the stator 5, and the rotor 6.

The housing 2 accommodates components forming the motor 1 such as the stator 5 and the rotor 6 in an internal space 2s. That is, the housing 2 accommodates the motor 1. The housing 2 includes, for example, a case 21 and a cover 22. The bearings 3 rotatably support the shaft 4 to the housing 2.

The shaft 4 is what is called a rotation shaft and is formed of, for example, a metal member in a columnar shape extending along the axial direction A. The shaft 4 includes the axial center 40 and is provided to the housing 2 to be rotatable about the axial center 40. The shaft 4 transmits power to the outer part by rotating in the circumferential direction C. The shaft 4 is fixed to the rotor 6, and rotates in the circumferential direction C together with the rotor 6 when the rotor 6 rotates in the circumferential direction C.

The stator 5 is a part to generate a force for rotating the rotor 6 in the circumferential direction C. The stator 5 includes a stator core 51, an insulator 52, and the coils 53.

The stator core 51 is formed by layering plate-like metal members such as a silicon steel plate, an electromagnetic steel plate, and a soft magnetic steel plate in the axial direction A, and has a magnetic property. That is, the stator core 51 is a magnetic body, and the stator 5 includes the stator core 51 of a magnetic body. The stator core 51 according to the present embodiment includes a body 51a and the teeth 51b. The body 51a is formed in an annular shape when viewed from the axial direction A. The teeth 51b are formed to protrude from an inner peripheral surface of the body 51a to the opposite side R2 in the radial direction R. The stator 5 according to the present embodiment includes, for example, 18 teeth 51b.

The insulator 52 is formed of, for example, an insulation resin or the like and is attached to the surface of the stator core 51. The insulator 52 insulates the stator core 51 from the coils 53.

The coils 53 are formed by winding, for example, a winding around the teeth 51b via the insulator 52. The winding includes a conductive core wire (not illustrated) and an insulation covering part (not illustrated) covering the periphery of the core wire. The stator 5 according to the present embodiment includes, for example, eighteen coils 53.

The rotor 6 is provided rotatably about the axial center 40 of the shaft 4. The shaft 4 is a rotation shaft. In the motor 1 according to the present embodiment, the shaft 4 and the rotor 6 are integrally formed.

The rotor 6 is arranged, for example, inside the stator 5 (at the shaft 4 side) in the radial direction R. That is, the motor 1 is an inner rotor type brushless motor having the rotor 6 located inside the stator 5 in the radial direction R.

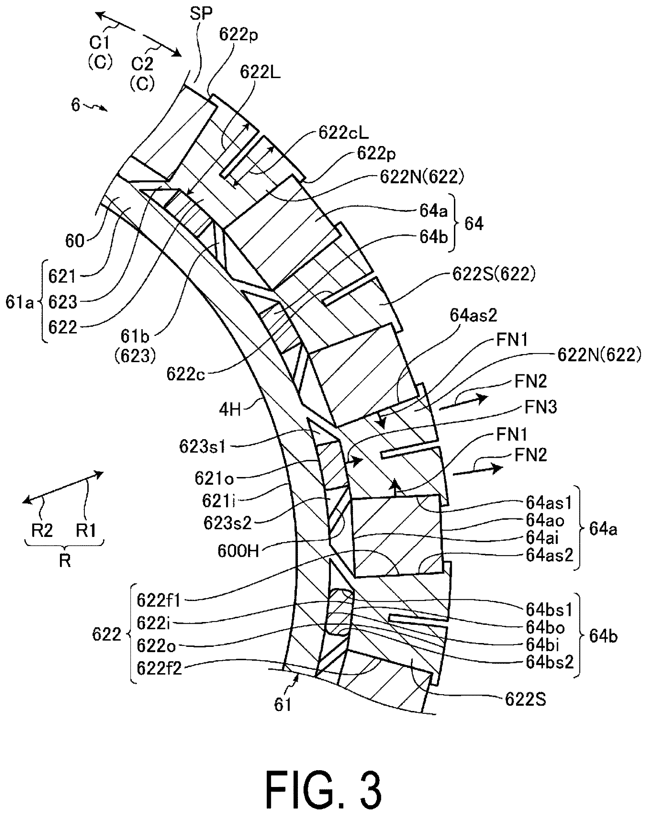

As illustrated in FIG. 2, the rotor 6 includes the rotor core 60 and the plurality of magnets 64. The magnet 64 included in the rotor 6 is described with reference to FIG. 3. FIG. 3 is a plan view illustrating a part of the rotor 6.

The magnet 64 is formed with, for example, a permanent magnet. The rotor 6 according to the present embodiment includes a plurality of first magnets 64a and a plurality of second magnets 64b. The first magnets 64a are arranged along the circumferential direction C, for example. The second magnets 64b are arranged along the circumferential direction C, for example. The first magnets 64a and the second magnets 64b are alternately arranged in the circumferential direction C. The plurality of magnets 64 include, for example, 20 first magnets 64a and 20 second magnets 64b.

The first magnet 64a is what is called a main magnet. The second magnet 64b is what is called a sub-magnet.

The first magnet 64a is arranged at the stator side R1 in the radial direction R relative to the second magnet 64b, and is opposed to the teeth 51b of the stator 5 in the radial direction R with a gap 5s interposed between the first magnet 64a and the stator 5.

When viewed from the axial direction A, the first magnet 64a includes an outer surface 64ao located at the stator side R1 in the radial direction R, an inner surface 64ai located at the opposite side R2 in the radial direction R, and a pair of lateral surfaces 64as1 and 64as2 opposed to each other in the circumferential direction C.

The outer surfaces 64ao are in contact with protruding parts 622p adjacent to each other in the circumferential direction C. The inner surface 64ai is opposed to an outer peripheral surface 6210 of an annular part 621 in the radial direction R.

Each of the pair of lateral surfaces 64as1 and 64as2 extends along the circumferential direction C. Of the pair of lateral surfaces 64as1 and 64as2, one lateral surface 64as1 or 64as2 is in contact with one lateral surface 622f1 of a magnetic pole piece 622, and of the pair of lateral surfaces 64as1 and 64as2, the other lateral surface 64as1 or 64as2 is in contact with the other lateral surface 622f2 of the magnetic pole piece 622. That is, the first magnet 64a is arranged between the lateral surface 622f1 of one magnetic pole piece 622 of the magnetic pole pieces 622 adjacent to each other in the circumferential direction C, and the lateral surface 622f2 of the other magnetic pole piece 622. The first magnet 64a is arranged between the lateral surfaces 622f1 and 622f2 of two adjacent magnetic pole pieces 622 in the circumferential direction C, and the plurality of first magnets 64a are radially arranged in the rotor 6 when viewed from the axial direction A.

In addition, of the pair of lateral surfaces 64as1 and 64as2 of the first magnet 64a, one lateral surface 64as1 or 64as2 is an N pole, and the other lateral surface 64as1 or 64as2 is an S pole.

In the rotor 6 according to the present embodiment, the lateral surfaces 64as1 and 64as2 of two adjacent first magnets 64a in the circumferential direction C are arranged to have the same polarity, and the same magnetic pole is applied to the magnetic pole piece 622 interposed between the two magnets 64. That is, of the pair of lateral surfaces 622f1 and 622f2 of one magnetic pole piece 622, the magnetic poles of the lateral surfaces 64as1 and 64as2 of the first magnet 64a being in contact with the one lateral surface 622f1 are the same as the magnetic poles of the lateral surfaces 64as1 and 64as2 of the first magnet 64a being in contact with the other lateral surface 622f2. Therefore, the magnetic force of either the N pole or the S pole of the first magnet 64a is applied to the magnetic pole piece 622, and is released to the stator side R1 in the radial direction R. In addition, in the rotor 6, the magnetic poles released from a plurality of magnetic pole pieces 622 arranged in the circumferential direction C are arranged such that the N pole and the S pole are alternately repeated in the circumferential direction C.

For example, as illustrated in FIG. 3, for a magnetic pole piece denoted by reference sign 622N, the lateral surfaces 64as1 and 64as2 of two first magnets 64a adjacent to each other in the circumferential direction C are arranged to be N poles, the magnetic pole of the N pole indicated by an arrow FN1 in FIG. 3 is applied from the first magnets 64a to the magnetic pole piece 622N interposed between the first magnets 64a, and the magnetic force of the N pole indicated by an arrow FN2 is released from an outer peripheral surface 6220 of the magnetic pole piece 622N to the stator side R1 in the radial direction R.

The magnetic pole of a magnetic pole piece denoted by reference sign 622S and adjacent to the magnetic pole piece 622N in the circumferential direction C is as follows. The lateral surfaces 64as1 and 64as2 of two first magnets 64a adjacent to the magnetic pole piece 622S in the circumferential direction C are arranged to be S poles, and the magnetic pole of the S pole is applied to the magnetic pole piece 622S interposed between the two first magnets 64a.

The second magnet 64b is arranged at the opposite side R2 in the radial direction R relative to the first magnet 64a.

When viewed from the axial direction A, the second magnet 64b includes an outer surface 64bo located at the stator side R1 in the radial direction R, an inner surface 64bi located at the opposite side R2 in the radial direction R, and a pair of lateral surfaces 64bs1 and 64bs2 opposed to each other in the circumferential direction C.

The outer surface 64bo is in contact with an inner peripheral surface 622i of the magnetic pole piece 622 in the circumferential direction C. The inner surface 64bi is in contact with the outer peripheral surface 6210 of the annular part 621 in the circumferential direction C.

Each of the pair of lateral surfaces 64bs1 and 64bs2 extends along the radial direction R. Of the pair of lateral surfaces 64bs1 and 64bs2, one lateral surface 64bs1 or 64bs2 is opposed to a connecting part 623 of a first magnetic body 61a with a first gap 623s1 interposed between the one lateral surface 64bs1 or 64bs2 and the connecting part 623, and the other lateral surface 64bs1 or 64bs2 is opposed to a connecting part 623 of a second magnetic body 61b with a second gap 623s2 interposed between the other lateral surface 64bs1 or 64bs2 and the connecting part 623. The plurality of second magnets 64b are radially arranged in the rotor 6 when viewed from the axial direction A.

The second magnet 64b is arranged between the annular part 621 and the magnetic pole piece 622 in the radial direction R. More specifically, the second magnet 64b is arranged between the outer peripheral surface 6210 of the annular part 621 and the inner peripheral surface 622i of the magnetic pole piece 622 in the radial direction R. That is, the second magnet 64b is in contact with the inner peripheral surface 622i (inner surface 64bi) of the magnetic pole piece 622 in the radial direction R.

In addition, one of the inner surface 64bi and the outer surface 64bo of the second magnet 64b is an N pole, and the other is an S pole. In the rotor 6 according to the present embodiment, the second magnet 64b is arranged such that the magnetic pole applied to the magnetic pole piece 622 by the first magnet 64a, and the magnetic pole applied to the magnetic pole piece 622 by the second magnet 64b are the same pole.

For example, as illustrated in FIG. 3, the outer surface 64bo of the second magnet 64b is arranged to be an N pole to the magnetic pole piece denoted by the reference sign 622N, and the magnetic pole of the N pole indicated by an arrow FN3 in FIG. 3 is applied to the magnetic pole piece 622N from the outer surface 64bo of the second magnet 64b.

The outer surface 64bo of the second magnet 64b is arranged to be an S pole to the magnetic pole piece adjacent to the magnetic pole piece 622N in the circumferential direction C and denoted by the reference sign 622S, and the magnetic pole of the S pole is applied to the magnetic pole piece 622S from the outer surface 64bo of the second magnet 64b.

In the circumferential direction C, the first gap 623s1 is formed between one lateral surface 64bs1 of the pair of lateral surfaces 64bs1 and 64bs2 of the second magnet 64b and the connecting part 623 of the first magnetic body 61a. Air is present in the first gap 623s1 described above. The air is a nonmagnetic material, and the magnetic permeability of the air is smaller than the magnetic permeability of a magnetic material forming the rotor core 60. That is, the air present in the first gap 623s1 serves as a flux barrier for suppressing magnetic fluxes directed from the lateral surface 64bs1 of the second magnet 64b toward the first magnet 64a in the circumferential direction C.

Therefore, at a part with the first gap 623s1, the magnetic fluxes directed from the lateral surface 64bs1 of the second magnet 64b toward the first magnet 64a are suppressed by the air. The air is a nonmagnetic material. As a result, at the part with the first gap 623s1, the magnetic fluxes directed from the lateral surface 64bs1 of the second magnet 64b toward the first magnet 64a are suppressed by the first gap 623s1. The first gap 623s1 is a nonmagnetic material.

In the circumferential direction C, a second gap 623s2 is formed between the other lateral surface 64bs1 of the pair of lateral surfaces 64bs1 and 64bs2 of the second magnet 64b and the connecting part 623 of the second magnetic body 61b. The second gap 623s2 serves as a flux barrier, similarly to the above first gap 623s1.

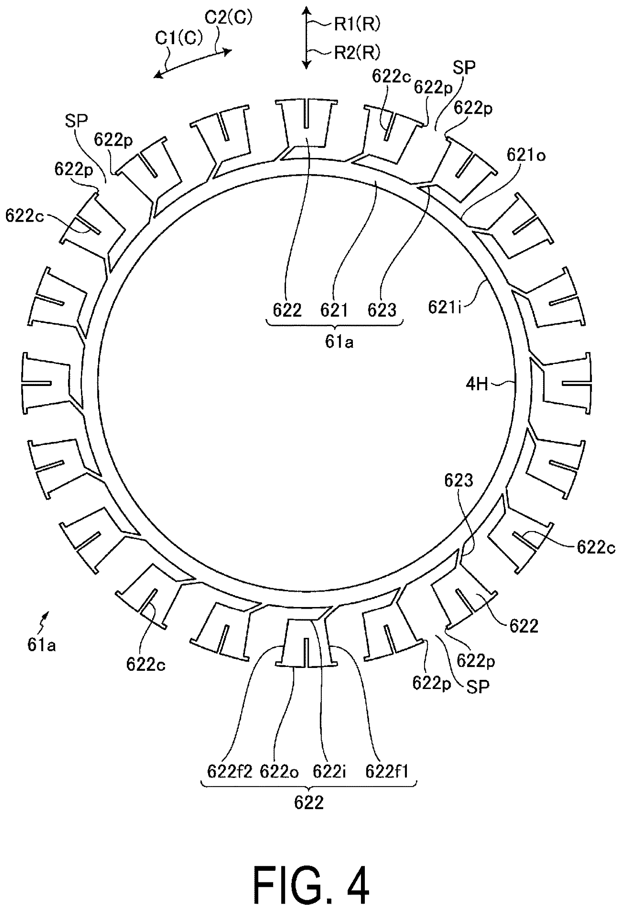

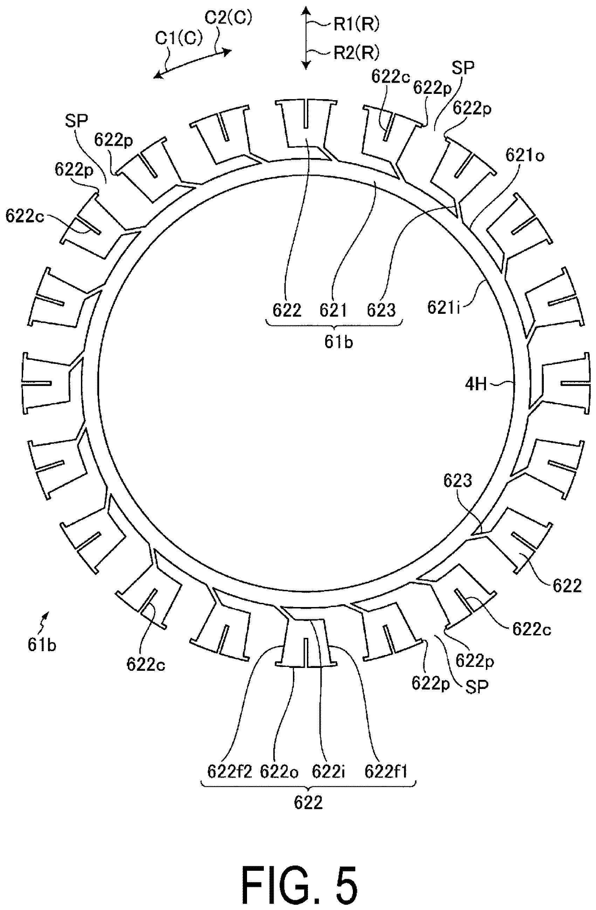

The rotor core 60 is described below with reference to FIGS. 3, 4, and 5. FIG. 4 is a plan view of the first magnetic body 61a used for the rotor core 60 illustrated in FIG. 2. FIG. 5 is a plan view of the second magnetic body 61b used for the rotor core 60 illustrated in FIG. 2.

The rotor core 60 is formed by layering, in the axial direction A, a plurality of magnetic bodies 61 formed in a plate shape using a magnetic material such as iron. The rotor core 60 serves as a path of magnetic fluxes between the magnet 64 and the teeth 51b, and serves as a path of magnetic fluxes between the first magnet 64a and the second magnet 64b forming the magnet 64. The magnetic body 61 according to the present embodiment includes a plurality of first magnetic bodies 61a and a plurality of second magnetic bodies 61b. Each of the first magnetic body 61a and the second magnetic body 61b is formed of a magnetic material into a plate shape (or a sheet shape) having a small thickness in the axial direction A.

The first magnetic body 61a and the second magnetic body 61b are described below. The first magnetic body 61a and the second magnetic body 61b are formed in the same shape, and are alternately layered one by one with the front and back sides inverted in the axial direction A. Therefore, in order to avoid redundant description, the configuration of the first magnetic body 61a is described below, and the description of the configuration of the second magnetic body 61b is omitted; however, in the configuration of the second magnetic body 61b, the same components as the components of the first magnetic body 61a are denoted by the same signs, and a description of the same components is omitted.

The first magnetic body 61a illustrated in FIG. 4 includes the annular part 621 provided at one side in the radial direction R, the magnetic pole piece 622 provided at the other side in the radial direction R, and the connecting part 623 connecting the annular part 621 and the magnetic pole piece 622. More specifically, the first magnetic body 61a according to the present embodiment is provided with the magnetic pole piece 622 at the stator side R1 in the radial direction R, and is provided with the annular part 621 at the opposite side R2 in the radial direction R.

The first magnetic body 61a includes, for example, one annular part 621. The number of magnetic pole pieces 622 provided at the first magnetic body 61a is, for example, the same as the number of magnets 64. In addition, the number of connecting parts 623 according to the present embodiment is the same as the number of magnetic pole pieces 622. Moreover, the first magnetic body 61a according to the present embodiment includes one annular part 621, a plurality of magnetic pole pieces 622, and a plurality of connecting parts 623.

The annular part 621 is formed in an annular shape when viewed from the axial direction A. More specifically, the annular part 621 has the outer peripheral surface 621o located at one side in the radial direction R and an inner peripheral surface 621i located at the other side, and is formed to be continuous in the circumferential direction C. More specifically, the annular part 621 according to the present embodiment has the outer peripheral surface 621o located at the stator side R1 in the radial direction R and the inner peripheral surface 621i located at the opposite side R2 in the radial direction R. The inner peripheral surface 621i forms a hole 4H. The shaft 4 is inserted into the hole 4H.

Each of the magnetic pole pieces 622 includes the outer peripheral surface 622o located at one side in the radial direction R and the inner peripheral surface 622i located at the other side. More specifically, the magnetic pole piece 622 according to the present embodiment has the outer peripheral surface 622o located at the stator side R1 in the radial direction R and the inner peripheral surface 622i located at the opposite side R2 in the radial direction R. Moreover, each of the magnetic pole pieces 622 has the pair of lateral surfaces 622f1 and 622f2 opposed to each other in the circumferential direction C. The plurality of magnetic pole pieces 622 are arranged radially outside the annular part 621 via the connecting parts 623 in the radial direction R. The magnetic pole piece 622 having such a configuration is in contact with two adjacent first magnets 64a among the plurality of first magnets 64a in the circumferential direction C.

The inner peripheral surface 622i of the magnetic pole piece 622 extending in the circumferential direction C is opposed to the outer peripheral surface 621o of the annular part 621 in the radial direction R.

The outer peripheral surface 622o of the magnetic pole piece 622 extending in the circumferential direction C is a lateral surface when viewed from the stator side R1 in the radial direction R, and has a recessed part 622c extending in the radial direction R.

The recessed part 622c extends, for example, linearly along the radial direction R. Moreover, the recessed part 622c is, for example, arranged in the circumferential direction C at the center of the magnetic pole piece 622 in the circumferential direction C. The length of the magnetic pole piece 622 in the radial direction R is 622L, and the length of the recessed part 622c formed at the magnetic pole piece 622 in the radial direction R is 622cL. The following relationship is established between the length 622L of the magnetic pole piece 622 in the radial direction R and the length 622cL of the recessed part 622c in the radial direction R.

$$622cL > 622L \times (1/3)$$

Each of the lateral surfaces 622f1 and 622f2 extends in the radial direction R and connects the outer peripheral surface 622o and the inner peripheral surface 622i. Moreover, each of the lateral surfaces 622f1 and 622f2 includes the protruding part 622p protruding in the radial direction R at an end part at the stator side R1 in the radial direction R. The protruding parts 622p of the two lateral surfaces 622f1 and 622f2 opposed to each other in the circumferential direction C protrude from the lateral surfaces 622f1 and 622f2 to be close to each other. In other words, the protruding part 622p protruding from the lateral surface 622f1 protrudes toward the protruding part 622p of the adjacent lateral surface 622f2 in the circumferential direction C. In addition, in the circumferential direction C, a predetermined gap SP is formed between two adjacent protruding parts 622p.

The connecting part 623 protrudes from the outer peripheral surface 621o of the annular part 621 toward the stator side R1 in the radial direction R so as to be inclined. In other words, the connecting part 623 protrudes from the outer peripheral surface 621o of the annular part 621 toward the reverse rotation direction C2 side so as to be inclined. That is, the connecting part 623 extends in an inclined manner in the radial direction R and the circumferential direction C. In other words, the connecting part 623 protrudes from the inner peripheral surface 622i of the magnetic pole piece 622 toward the rotation direction C1 side in the circumferential direction C and toward the opposite side R2 in the radial direction R so as to be inclined. That is, the first magnetic body 61a includes the annular part 621 and the magnetic pole piece 622 connected to the annular part 621 via the connecting part 623.

The second magnetic body 61b has an annular part 621 and a magnetic pole piece 622 similarly to the first magnetic body 61a. In addition, since the second magnetic body 61b has the front and back sides inverted to the first magnetic body 61a in the axial direction A, the protruding direction of the connecting part 623 is different.

More specifically, the connecting part 623 of the second magnetic body 61b illustrated in FIG. 5 protrudes from the outer peripheral surface 621o of the annular part 621 toward the stator side R1 in the radial direction R so as to be inclined. In other words, the connecting part 623 protrudes from the outer peripheral surface 621o of the annular part 621 toward the rotation direction C1 side so as to be inclined. That is, the connecting part 623 extends in an inclined manner in the radial direction R and the circumferential direction C. In other words, the connecting part 623 protrudes from the inner peripheral surface 622i of the magnetic pole piece 622 toward the reverse rotation direction C2 side in the circumferential direction C and toward the opposite side R2 in the radial direction R so as to be inclined. That is, the second magnetic body 61b includes the annular part 621 and the magnetic pole piece 622 connected to the annular part 621 via the connecting part 623.

As described above, the first magnetic body 61a and the second magnetic body 61b are alternately layered one by one with the front and back sides inverted in the axial direction A. In the rotor core 60 according to the present embodiment, the number of first magnetic bodies 61a and the number of second magnetic bodies 61b are the same. Accordingly, in the rotor core 60, the first magnetic body 61a is arranged at one side in the axial direction A, and the second magnetic body 61b is arranged at the other side in the axial direction A. That is, the first magnetic bodies 61a are arranged in odd-numbered layers including a first layer and a third layer. On the other hand, the second magnetic bodies 61b are arranged in even-numbered layers including a second layer and a fourth layer.

The plurality of annular parts 621 in the first magnetic bodies 61a and the plurality of annular parts 621 in the second magnetic bodies 61b form the annular part 621 of the rotor core 60 illustrated in FIG. 3. That is, the rotor core 60 includes the annular part 621 similar to the annular parts 621 of the first magnetic bodies 61a and the second magnetic bodies 61b.

In addition, the plurality of magnetic pole pieces 622 in the first magnetic bodies 61a and the plurality of magnetic pole pieces 622 in the second magnetic bodies 61b form the magnetic pole piece 622 of the rotor core 60 illustrated in FIG. 3. That is, the rotor core 60 has the magnetic pole piece 622 similar to the magnetic pole piece 622 of the magnetic body 61. The magnetic pole piece 622 of such a rotor core 60 is in contact with two adjacent first magnets 64a among the plurality of first magnets 64a in the circumferential direction C.

The recessed part 622c formed at the magnetic pole piece 622 of the rotor core 60 extends in the axial direction A. More specifically, the recessed part 622c extends linearly along the axial direction A, and extends linearly along the axial direction A from the first magnetic body 61a arranged at one end in the axial direction A to the second magnetic body 61b arranged at the other end in the axial direction A.

Moreover, the plurality of connecting parts 623 in the first magnetic bodies 61a and the plurality of connecting parts 623 in the second magnetic bodies 61b form the connecting part 623 of the rotor core 60 illustrated in FIG. 3. That is, the connecting part 623 of the rotor core 60 is formed by the connecting parts 623 of the plurality of first magnetic bodies 61a and the connecting parts 623 of the plurality of second magnetic bodies 61b, in other words, the rotor core 60 has, for example, one annular part 621, a plurality of magnetic pole pieces 622, and a plurality of connecting parts 623. The rotor core 60 includes the annular part 621 and the magnetic pole pieces 622 connected to the annular part 621 via the connecting parts 623.

As illustrated in FIG. 3, the rotor core 60 has a hole 600H formed by the connecting part 623 of the first magnetic body 61a, the connecting part 623 of the second magnetic body 61b, the outer peripheral surface 621o of the annular part 621, and the inner peripheral surface 622i of the magnetic pole piece 622. The second magnet 64b is inserted into the hole 600H.

In the circumferential direction C of the rotor 6 according to the present embodiment, the first gap 623s1 is formed between the connecting part 623 of the first magnetic body 61a and the lateral surface 64bs1 of the second magnet 64b. In addition, in the circumferential direction C of the rotor 6 according to the present embodiment, the second gap 623s2 is formed between the connecting part 623 of the second magnetic body 61b and the lateral surface 64bs2 of the second magnet 64b.

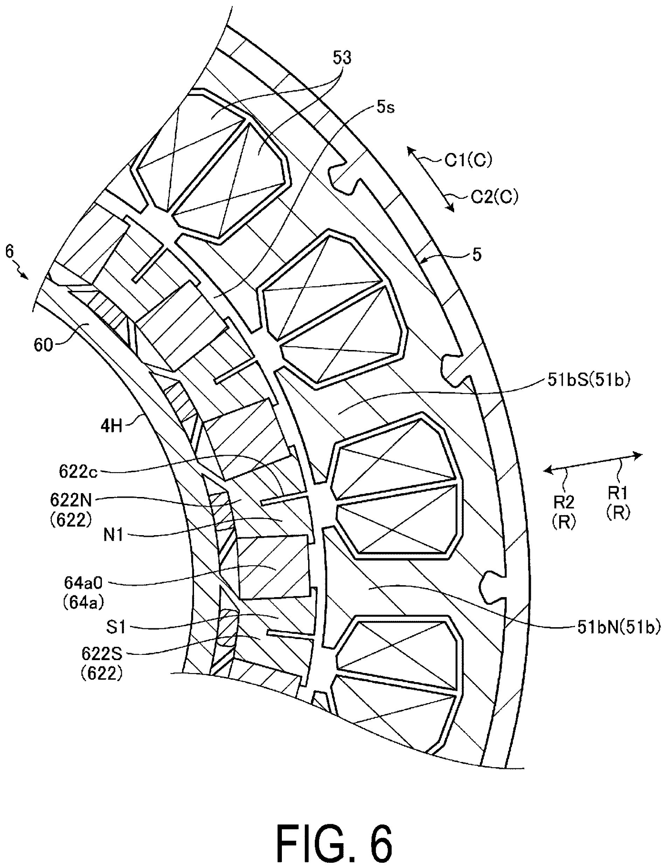

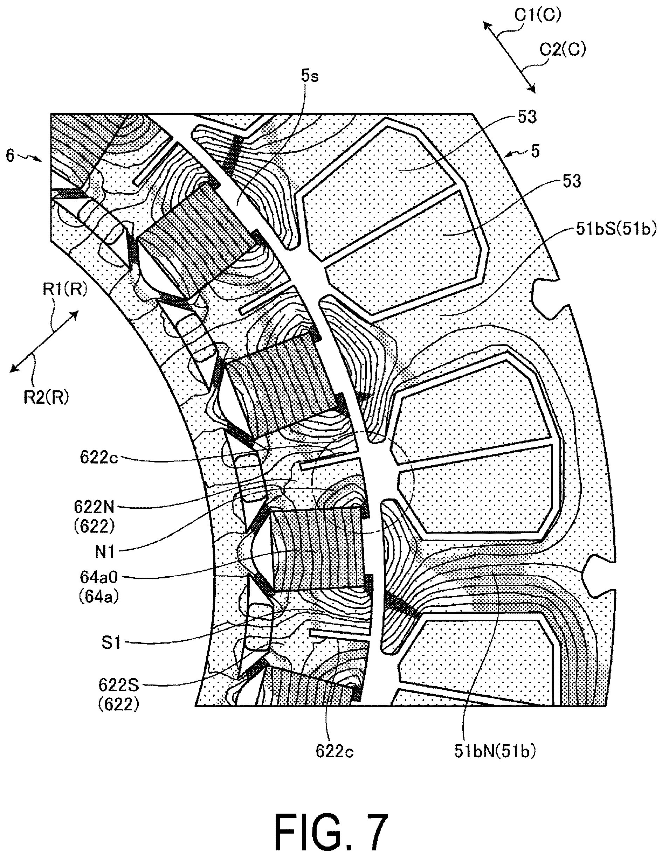

FIG. 6 is a cross-sectional view illustrating a part of the rotor 6 and a part of the stator 5. FIG. 7 is a cross-sectional view illustrating the same parts as the parts in FIG. 6, and is a plan view illustrating magnetic lines of force of each part. Note that in FIG. 6, × located at both sides of the teeth 51b to be described below indicates omission of a winding wound around the teeth 51b and forming the coils 53.

In FIG. 6, in a magnetic pole piece denoted by reference sign 622S, a part S1 of the magnetic pole piece 622s located at the rotation direction C1 side with respect to the recessed part 622c is opposed to teeth denoted by reference sign 51bN in the radial direction R.

In addition, the first magnet 64a in contact with the magnetic pole piece 622S and located at the rotation direction C1 side with respect to the magnetic pole piece 622S is denoted by reference sign 64a0. The first magnet 64a0 is opposed to the teeth 51bn in the radial direction R. Therefore, as illustrated in FIG. 7, a large number of magnetic lines of force are formed at the part S1 of the magnetic pole piece 622S and the teeth 51bn, and the magnetic force of the part S1 and the teeth 51bn is large.

On the other hand, in a magnetic pole piece denoted by reference sign 622N in FIG. 6 and located at the rotation direction C1 side of the first magnet 64a0 in the circumferential direction C, magnetic lines of force passing through a part N1 of the magnetic pole piece 622N is directed from the first magnet 64a0 to the magnetic pole piece 622N, and then directed from the magnetic pole piece 622N to the protruding part 622p. In the following description, the positional relationship between the part N1 of the magnetic pole piece 622N and the teeth 51bn is referred to as a non-opposed state. The magnetic lines of force pass through the part N1 of the magnetic pole piece 622N.

In addition, in FIG. 6, teeth denoted by reference sign 51bs and located at the rotation direction C1 side with respect to the teeth 51bN are in a non-opposed state to the part N1 of the magnetic pole piece 622N in the radial direction R.

Moreover, the recessed part 622c is located between the first magnet 64a0 and the teeth 51bN, and air is present in the recessed part 622c. The air is a nonmagnetic material, and the magnetic permeability of the air is smaller than the magnetic permeability of the magnetic material forming the rotor core 60. Therefore, the magnetic force passing through the part N1 of the magnetic pole piece 622N located between the first magnet 64a0 and the teeth 51bS has a smaller number of magnetic lines of force than the part S1 of the magnetic pole piece 622S described above due to the recessed part 622c (part having a small number of characteristics of magnetic force is indicated by O in FIG. 7). That is, the magnetic force of the part N1 of the magnetic pole piece 622N is weaker than the magnetic force of the part S1 of the magnetic pole piece 622S. Although not illustrated, the same applies to the magnetic pole piece 622 at the reverse rotation direction C2 side relative to the part S1 of the magnetic pole piece 622S.

Accordingly, in the rotor 6, a magnetic force of a part of the magnetic pole piece 622 opposed to the teeth 51b in the radial direction R is large, and compared to the magnetic force, a magnetic force of a part of the magnetic pole piece 622 in a non-opposed state to the teeth 51b is smaller. As a result, the rotor 6 can be restrained from being pulled by the teeth 51b in a non-opposed state at the rotation direction C1 side, and can be restrained from being pulled by the teeth 51b in a non-opposed state at the reverse rotation direction C2 side, so that a cogging torque can be suppressed.

As described above, the rotor 6 according to the present embodiment includes the plurality of magnets 64 arranged in the circumferential direction C and the plurality of magnetic pole pieces 622, the magnetic pole piece 622 is in contact with two adjacent magnets 64 among the plurality of magnets 64 in the circumferential direction C, and the outer peripheral surface (lateral surface) 622o of the magnetic pole piece 622 extending in the circumferential direction C includes the recessed part 622c extending in the radial direction R. Therefore, the rotor 6 according to the present embodiment can suppress a cogging torque.

In the rotor 6 according to the present embodiment, the length 622cL of the recessed part 622c in the radial direction R is one-third or more of the length 622L of the magnetic pole piece 622 in the radial direction R.

The rotor 6 according to the present embodiment includes the annular part 621 and the magnetic pole pieces 622 connected to the annular part 621 via the connecting parts 623.

In the rotor 6 according to the present embodiment, the second magnet 64b is arranged between the annular part 621 and the magnetic pole piece 622 in the radial direction R. Therefore, the magnetic force directed from the magnetic pole piece 622 of the rotor 6 toward the teeth 51b opposed to the magnetic pole piece 622 in the radial direction R can be increased by the second magnet 64b.

In addition, in the radial direction R of the rotor 6 according to the present embodiment, the second magnet 64b is in contact with the inner peripheral surface (inner surface) 622i of the magnetic pole piece 622. Therefore, the magnetic force directed from the magnetic pole piece 622 of the rotor 6 toward the teeth 51b opposed to the magnetic pole piece 622 in the radial direction R can be increased by the second magnet 64b.

In addition, the motor 1 according to the present embodiment includes the rotor 6 having the above configuration, the shaft 4 fixed to the rotor 6, and the stator 5 including the coils 53 and the magnetic body 61 (stator core 51) wound around with the coils 53.

In addition, the electronic apparatus 100 according to the present embodiment includes the motor 1 having the above configuration and the housing 2 accommodating the motor 1.

In addition, the connecting part 623 of the rotor core 60 according to the present embodiment is formed by the connecting parts 623 of the plurality of first magnetic bodies 61a and the connecting parts 623 of the plurality of second magnetic bodies 61b. In each of the first magnetic bodies 61a and the second magnetic bodies 61b, one connecting part 623 is provided between the annular part 621 and the magnetic pole piece 622. Therefore, by reducing the number of connecting parts 623 as much as possible, the magnetic flux (hereinafter, referred to as "ineffective magnetic flux") leaking from the magnetic pole piece 622 to the annular part 621 via the connecting parts 623 can be reduced.

In the above-described embodiment, the inner rotor type motor 1 has been described. However, the motor 1 according to the present embodiment is not limited to the inner rotor type. For example, the motor 1 can be applied to an outer rotor type motor including the stator 5 located inside the rotor 6 in the radial direction R when viewed from the axial direction A.

First Modified Example of First Embodiment

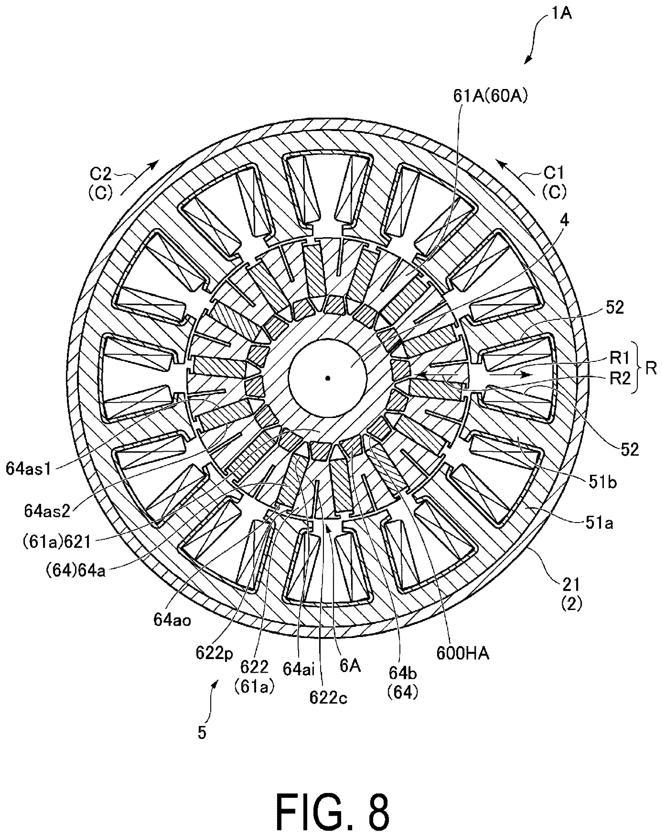

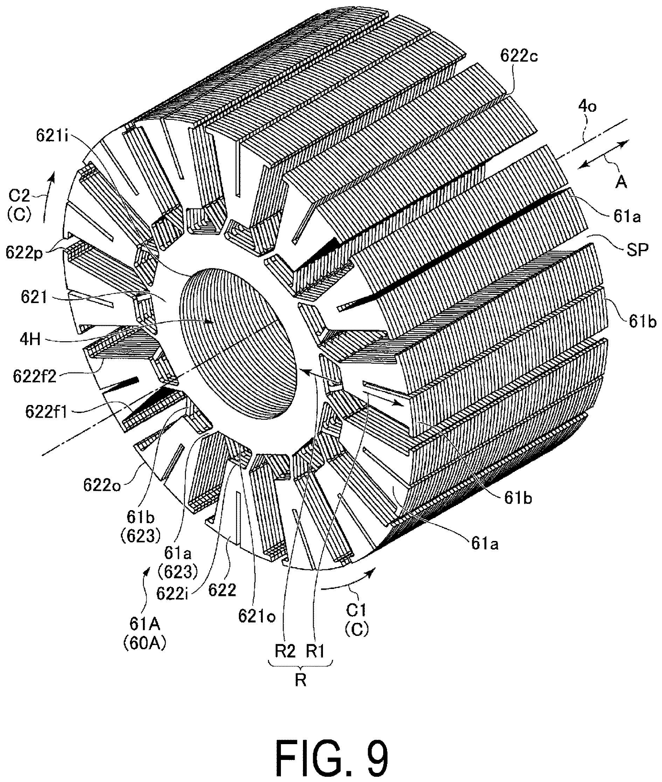

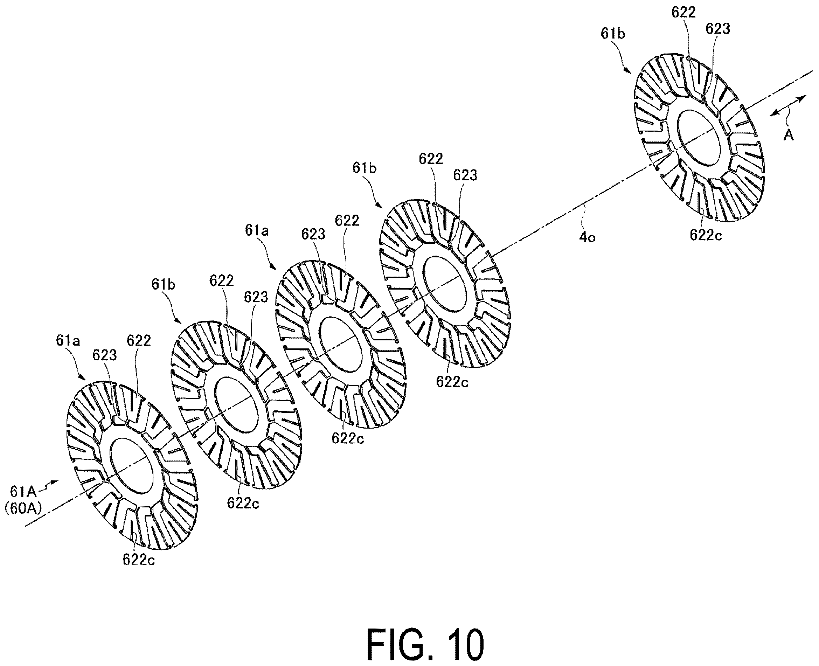

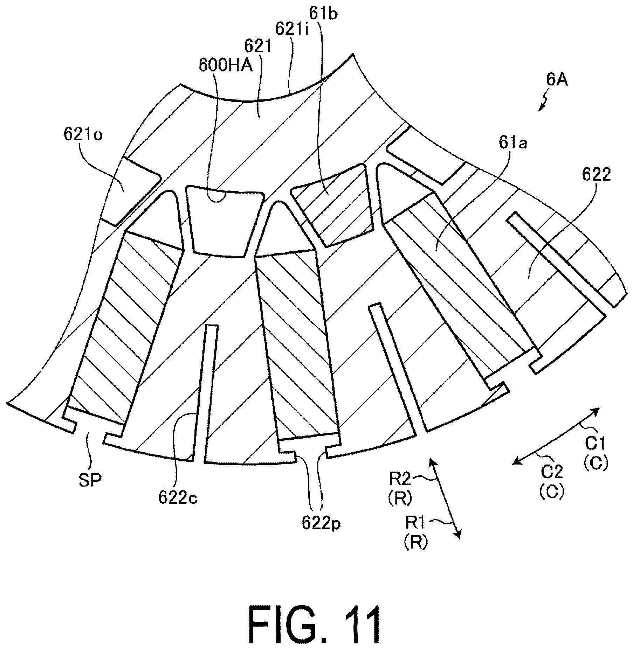

A rotor 6A and the like according to the first modified example of the first embodiment are described with reference to FIGS. 8 to 11. FIG. 8 is a horizontal cross-sectional view of a motor 1A using the rotor 6A according to the first modified example of the first embodiment. FIG. 9 is a perspective view of a rotor core 60A included in the rotor 6A illustrated in FIG. 9. FIG. 10 is an exploded perspective view of the rotor core 60A illustrated in FIG. 9. FIG. 11 is an enlarged plan view of a part of FIG. 8. Note that in FIG. 8, × located at both sides of the teeth 51b indicates omission of a winding wound around the teeth 51b and forming the coils 53.

The relationship between a hole 600HA formed at the rotor 6A according to the first modified example of the first embodiment and the second magnet 64b inserted into the hole 600HA is different from the relationship between the hole 600HA formed at the rotor 6 according to the first embodiment and the second magnet 64b inserted into the hole 600HA. Therefore, in the configuration of the rotor 6A according to the first modified example of the first embodiment, differences from the configuration of the rotor 6 according to the first embodiment are described below, and the same components are denoted by the same signs and are not described.

As illustrated in FIG. 8, the motor 1A according to the present embodiment includes the housing 2, bearings (not illustrated), the shaft 4, the stator 5, and the rotor 6A. The rotor 6A includes the rotor core 60A and a plurality of magnets 64.

The rotor core 60A is formed by layering a plurality of first magnetic bodies 61a and a plurality of second magnetic bodies 61b in the axial direction A.

The first magnetic body 61a includes an annular part 621, a magnetic pole piece 622, and a connecting part 623 connecting the annular part 621 and the magnetic pole piece 622.

An outer peripheral surface 622o of the rotor core 60A extending in the circumferential direction C is a lateral surface when viewed from the stator side R1 in the radial direction R, and has a recessed part 622c extending in the radial direction R.

The second magnetic body 61b has an annular part 621 and a magnetic pole piece 622 similarly to the first magnetic body 61a.

As illustrated in FIG. 11, the rotor core 60A has the hole 600HA formed by the connecting part 623 of the first magnetic body 61a, the connecting part 623 of the second magnetic body 61b, an outer peripheral surface 621o of the annular part 621, and an inner peripheral surface 622i of the magnetic pole piece 622. The second magnet 64b is inserted into the hole 600HA.

In the rotor 6A according to the present modified example, an inner peripheral surface of the hole 600HA and the outer peripheral surface of the second magnet 64b are not provided with a gap, and the entire circumference of the inner peripheral surface of the hole 600HA and the entire circumference of the outer peripheral surface of the second magnet 64b are in contact with each other.

In the present embodiment, an example of inserting the second magnet 64b into the hole 600HA of the rotor core 60A has been described. However, the rotor 6A according to the present embodiment is not limited to this example. For example, the second magnet 64b may not be inserted into the hole 600HA, and air present inside the hole 600HA may serve as a flux barrier for the first magnet 64a. That is, the rotor 6A according to the present embodiment includes the rotor core 60A having the open hole 600HA and the first magnet 64a.

Second Modified Example of First Embodiment

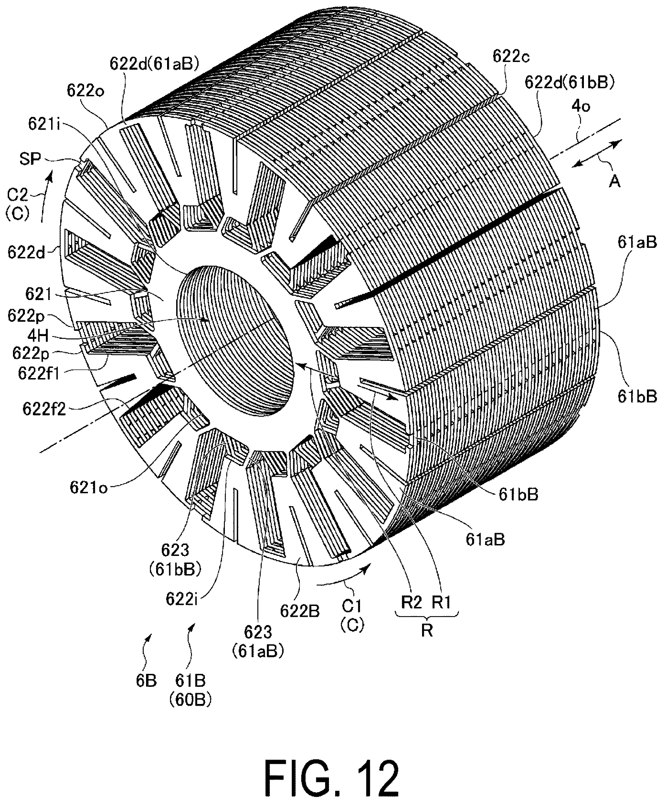

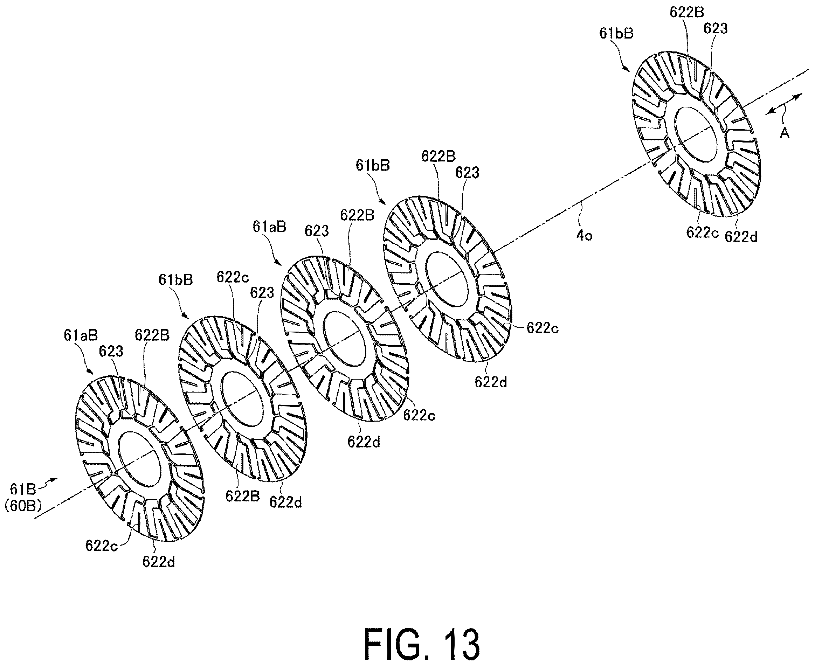

A rotor 6B and the like according to the second modified example of the first embodiment are described with reference to FIGS. 12 and 13. FIG. 12 is a perspective view of a rotor core 60B included in the rotor 6B according to the second modified example of the first embodiment. FIG. 13 is an exploded perspective view of the rotor core 60B illustrated in FIG. 12.

The shape of a magnetic pole piece 622B in a first magnetic body 61aB of the rotor 6B according to the second modified example of the first embodiment, and the shape of a magnetic pole piece 622B in a second magnetic body 61bB are different from the shape of the magnetic pole piece 622 in the first magnetic body 61a of the rotor 6 according to the first embodiment and the shape of the magnetic pole piece 622 in the second magnetic body 61b. Therefore, the shape of the magnetic pole piece 622B of the rotor core 60B formed by magnetic pole pieces 622B of a plurality of first magnetic bodies 61aB and magnetic pole pieces 622B of a plurality of second magnetic bodies 61bB in the rotor 6B according to the second modified example of the first embodiment is different from the shape of the magnetic pole piece 622 of the rotor core 60 formed by the magnetic pole pieces 622 of the plurality of first magnetic bodies 61a and the magnetic pole pieces 622 of the plurality of second magnetic bodies 61b in the rotor 6 according to the first embodiment. Therefore, in the configuration of the rotor 6B according to the second modified example of the first embodiment, differences from the configuration of the rotor 6 according to the first embodiment are described below, and the same components are denoted by the same signs and are not described.

The rotor core 60B is formed by layering, in the axial direction A, a plurality of magnetic bodies 61B formed in a plate shape using a magnetic material such as iron. The magnetic body 61B according to the present embodiment includes a plurality of first magnetic bodies 61aB and a plurality of second magnetic bodies 61bB.

The first magnetic body 61a includes an annular part 621, a magnetic pole piece 622B, and a connecting part 623.

The plurality of magnetic pole pieces 622B include a part (hereinafter, referred to as a "bridge part 622d") between two adjacent magnetic pole pieces 622B in the circumferential direction C and connecting these two magnetic pole pieces 622B. In addition, the magnetic pole piece 622B adjacent in the circumferential direction C to the magnetic pole piece 622B provided with the bridge part 622d is provided with a protruding part 622p. That is, the bridge part 622d and the protruding part 622p are alternately arranged at two adjacent magnetic pole pieces 622B in the circumferential direction C in the plurality of magnetic pole pieces 622B.

The second magnetic body 61b has an annular part 621B and a magnetic pole piece 622B similarly to the first magnetic body 61a. In addition, the plurality of magnetic pole pieces 622B in the first magnetic body 61aB and the plurality of magnetic pole pieces 622B in the second magnetic body 61bB form the magnetic pole piece 622 of the rotor core 60B illustrated in FIG. 12. In the rotor core 60B according to the present embodiment, as illustrated in FIG. 12, the position of the bridge part 622d in the circumferential direction C in the first magnetic body 61aB and the position of the bridge part 622d in the circumferential direction C in the second magnetic body 61bB are arranged to deviate from each other.

Therefore, the rotor core 60B according to the present modified example is formed in a substantially cylindrical shape by the bridge part 622d, so that the strength of the rotor core 60B can be improved.

Third Modified Example of First Embodiment

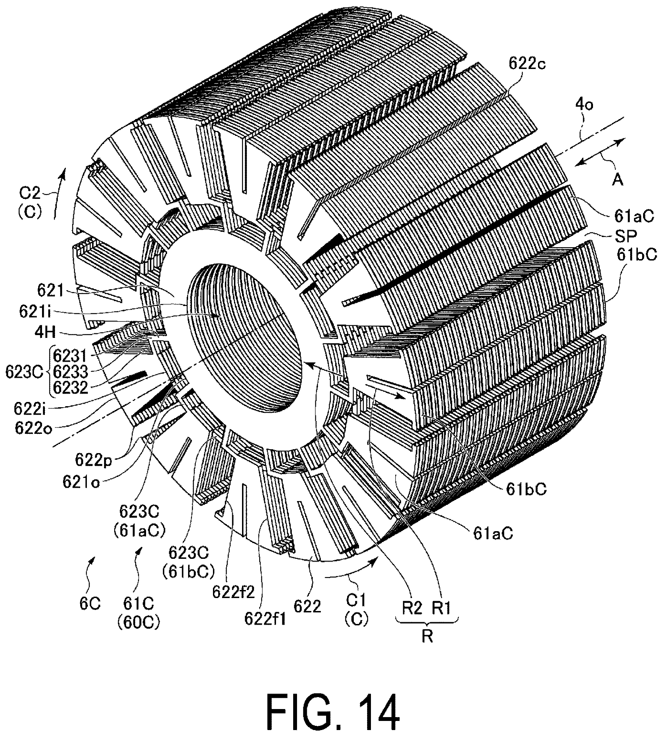

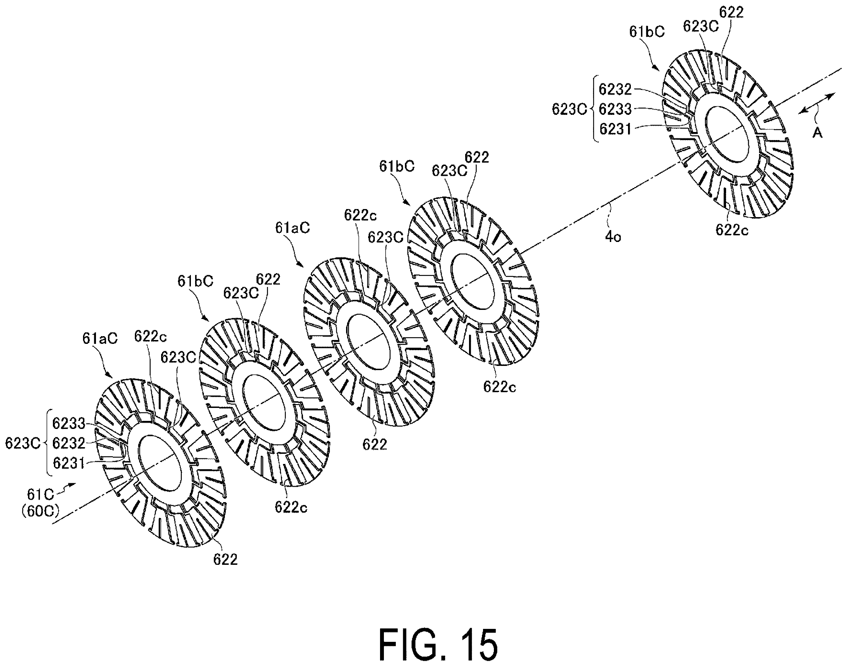

A rotor 6C and the like according to the third modified example of the first embodiment are described with reference to FIGS. 14 and 15. FIG. 14 is a perspective view of a rotor core 60C included in the rotor 6C according to the third modified example of the first embodiment. FIG. 15 is an exploded perspective view of the rotor core 60C illustrated in FIG. 14.

The shape of a connecting part 623C in a first magnetic body 61aC and the shape of a connecting part 623C in a second magnetic body 61bC of the rotor 6C according to the third modified example of the first embodiment are different from the shape of the connecting part 623C in the first magnetic body 61a and the shape of the connecting part 623C in the second magnetic body 61b of the rotor 6 according to the first embodiment. Therefore, the shape of the connecting part 623C of the rotor core 60C formed by connecting parts 623C of a plurality of first magnetic bodies 61aC and connecting parts 623C of a plurality of second magnetic bodies 61bC in the rotor 6C according to the third modified example of the first embodiment is different from the shape of the magnetic pole piece 622 of the rotor core 60 formed by the magnetic pole pieces 622 of the plurality of first magnetic bodies 61a and the magnetic pole pieces 622 of the plurality of second magnetic bodies 61b in the rotor 6 according to the first embodiment. Therefore, in the configuration of the rotor 6C according to the third modified example of the first embodiment, differences from the configuration of the rotor 6 according to the first embodiment are described below, and the same components are denoted by the same signs and are not described.

A magnetic body 61C according to the present embodiment includes the plurality of first magnetic bodies 61aC and the plurality of second magnetic bodies 61bC.

The first magnetic body 61aC includes an annular part 621, a magnetic pole piece 622, and a connecting part 623C connecting the annular part 621 and the magnetic pole piece 622.

The connecting part 623C includes a first part 6231 extending along the radial direction R, a second part 6232 extending along the circumferential direction C, and a bent part 6233 connecting the first part 6231 and the second part 6232, and is formed in a bent shape when viewed from the axial direction A.

One end part of the connecting part 623C (end part at the first part 6231 side) is connected to an outer peripheral surface 621o of the annular part 621, the other end part of the connecting part 623C (end part at the second part 6232 side) is connected to an inner peripheral surface 622i of the magnetic pole piece 622, and the end part of the first part 6231 and the end part of the second part 6232 are connected via the bent part 6233. The second part 6232 extends from the one-side end part to the other-side end part of the connecting part 623C in the rotation direction C1 in the circumferential direction C.

The second magnetic body 61bC includes an annular part 621, a magnetic pole piece 622, and a connecting part 623C connecting the annular part 621 and the magnetic pole piece 622.

The connecting part 623C includes a first part 6231 extending along the radial direction R, a second part 6232 extending along the circumferential direction C, and a bent part 6233 connecting the first part 6231 and the second part 6232, and is formed in a bent shape when viewed from the axial direction A.

One end part of the connecting part 623C (end part at the first part 6231 side) is connected to an outer peripheral surface 621o of the annular part 621, the other end part of the connecting part 623C (end part at the second part 6232 side) is connected to an inner peripheral surface 622i of the magnetic pole piece 622, and the end part of the first part 6231 and the end part of the second part 6232 are connected via the bent part 6233. The second part 6232 extends from the one-side end part to the other-side end part of the connecting part 623C in the reverse rotation direction C2 in the circumferential direction C.

The connecting parts 623C of the rotor core 60C illustrated in FIG. 14 are formed by the plurality of connecting parts 623C of the first magnetic body 61aC and the plurality of connecting parts 623C of the second magnetic body 61bC. In the rotor core 60C according to the present modified example, the connecting part 623C is formed by the first part 6231 extending along the radial direction R and the second part 6232 extending along the circumferential direction C. Therefore, the extension length of the connecting part 623C can be increased as compared with a connecting part extending in a direction inclined relative to the radial direction R. Therefore, the ineffective flux leaking from the magnetic pole piece 622 to the annular part 621 via the connecting part 623C can be reduced.

Fourth Modified Example of First Embodiment

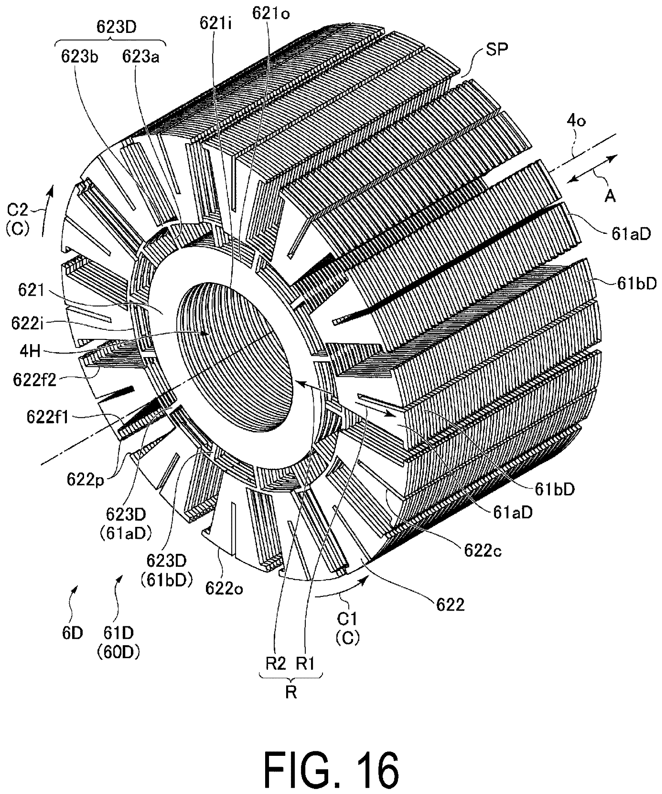

A rotor 6D and the like according to the fourth modified example of the first embodiment are described with reference to FIG. 16. FIG. 16 is a perspective view of a rotor core 60D included in the rotor 6D according to the fourth modified example of the first embodiment.

The shape of a connecting part 623D in the first magnetic body 61aD and the shape of a connecting part 623D in the second magnetic body 61bD of the rotor 6D according to the fourth modified example of the first embodiment are different from the shape of the connecting part 623D in the first magnetic body 61a and the shape of the connecting part 623D in the second magnetic body 61b of the rotor 6 according to the first embodiment. Therefore, the shape of the connecting part 623D of the rotor core 60D formed by connecting parts 623D of a plurality of first magnetic bodies 61aD and connecting parts 623D of a plurality of second magnetic bodies 61bD in the rotor 6D according to the fourth modified example of the first embodiment is different from the shape of the magnetic pole piece 622 of the rotor core 60 formed by the magnetic pole pieces 622 of the plurality of first magnetic bodies 61a and the magnetic pole pieces 622 of the plurality of second magnetic bodies 61b in the rotor 6 according to the first embodiment. Therefore, in the configuration of the rotor 6D according to the fourth modified example of the first embodiment, differences from the configuration of the rotor 6 according to the first embodiment are described below, and the same components are denoted by the same signs and are not described.

In a magnetic body 61C according to the present embodiment, the first magnetic body 61aD and the second magnetic body 61bD arranged by being rotated by a predetermined angle relative to the first magnetic body 61aD are alternately arranged in the axial direction A. The first magnetic body 61aD and the second magnetic body 61bD have the same shape.

The first magnetic body 61aD includes an annular part 621, a magnetic pole piece 622, and a connecting part 623D connecting the annular part 621 and the magnetic pole piece 622.

The connecting part 623D includes a first part 623a and a second part 623b, and is formed in a T-shape when viewed from the axial direction A.

The first part 623a extends along the radial direction R. One end of the connecting part 623D (end part at the first part 623a side) is connected to an outer peripheral surface 621o of the annular part 621.

The second part 623b extends along the circumferential direction C. The second part 623b includes two end parts connected to inner peripheral surfaces 622i of two adjacent magnetic pole pieces 622 and a middle part between the two end parts. The middle part of the second part 623b is connected to the other end part of the first part 623a.

In the first magnetic body 61aD and the second magnetic body 61bD, the connecting part 623D of the first magnetic body 61aD and the connecting part 623D of the second magnetic body 61bD are arranged at different positions in the circumferential direction C.

The plurality of connecting parts 623D in the first magnetic body 61aD and the plurality of connecting parts 623D in the second magnetic body 61bD form the connecting parts 623D of the rotor core 60D illustrated in FIG. 16.

In the rotor core 60D according to the present modified example, the first part 623a is provided in the middle of the connecting part 623D connected to two magnetic pole pieces 622. Therefore, the resistance to magnetic fluxes can be increased as compared with a connecting part connected to one magnetic pole piece 622. Therefore, the ineffective flux leaking from the magnetic pole piece 622 to the annular part 621 via the connecting part 623D can be reduced.

Fifth Modified Example of First Embodiment

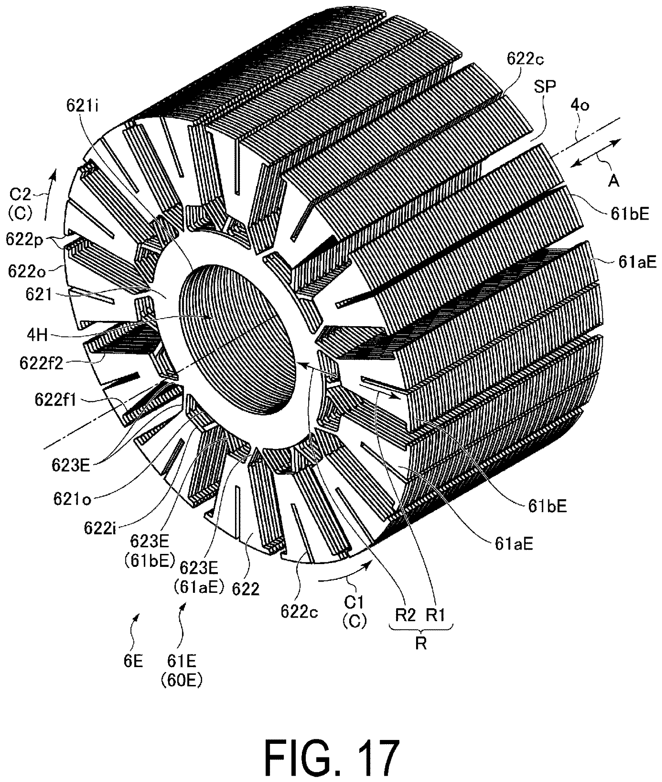

A rotor 6E and the like according to the fifth modified example of the first embodiment are described with reference to FIG. 17. FIG. 17 is a perspective view of a rotor core 60E included in the rotor 6E according to the fifth modified example of the first embodiment.

The shape of a connecting part 623E in the first magnetic body 61aE and the shape of a connecting part 623E in the second magnetic body 61bE of the rotor 6E according to the fifth modified example of the first embodiment are different from the shape of the connecting part 623E in the first magnetic body 61a and the shape of the connecting part 623E in the second magnetic body 61b of the rotor 6 according to the first embodiment. Therefore, the shape of the connecting part 623E of the rotor core 60E formed by connecting parts 623E of a plurality of first magnetic bodies 61aE and connecting parts 623E of a plurality of second magnetic bodies 61bE in the rotor 6E according to the fifth modified example of the first embodiment is different from the shape of the magnetic pole piece 622 of the rotor core 60 formed by the magnetic pole pieces 622 of the plurality of first magnetic bodies 61a and the magnetic pole pieces 622 of the plurality of second magnetic bodies 61b in the rotor 6 according to the first embodiment. Therefore, in the configuration of the rotor 6E according to the fifth modified example of the first embodiment, differences from the configuration of the rotor 6 according to the first embodiment are described below, and the same components are denoted by the same signs and are not described.

In a magnetic body 61C according to the present embodiment, the first magnetic body 61aE and the second magnetic body 61bE arranged by being rotated by a predetermined angle relative to the first magnetic body 61aE are alternately arranged in the axial direction A. The first magnetic body 61aE and the second magnetic body 61bE have the same shape.

The first magnetic body 61aE includes an annular part 621, a magnetic pole piece 622, and a connecting part 623E connecting the annular part 621 and the magnetic pole piece 622.

The connecting part 623E extends to be inclined relative to the radial direction R. In addition, the first magnetic body 61aE according to the present embodiment is arranged such that two connecting parts 623E branching into two have a shape (V-shape) when viewed from the axial direction A.

In the first magnetic body 61aE and the second magnetic body 61bE, the connecting part 623E of the first magnetic body 61aE and the connecting part 623E of the second magnetic body 61bE are arranged at different positions in the circumferential direction C.

Sixth Modified Example of First Embodiment

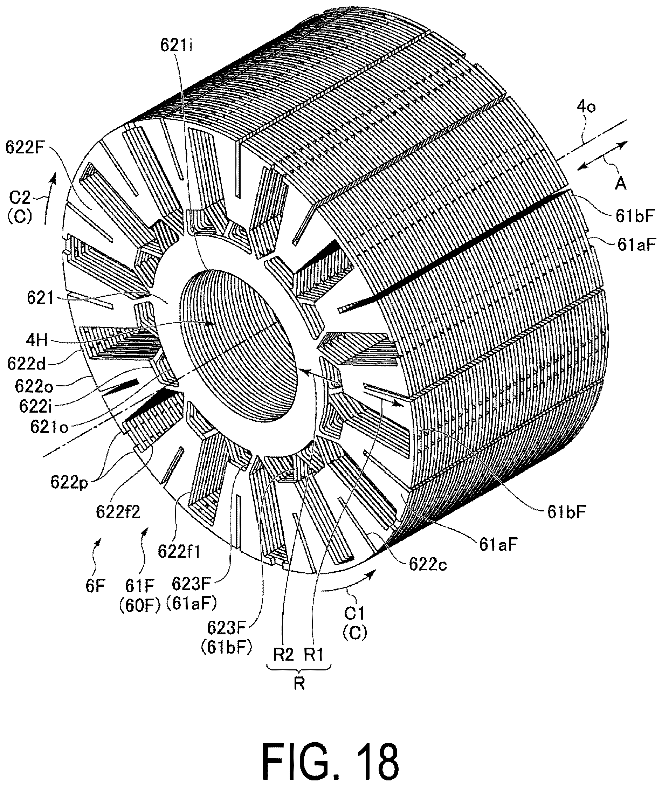

A rotor 6F and the like according to the sixth modified example of the first embodiment are described with reference to FIG. 18. FIG. 18 is a perspective view of a rotor core 60F included in the rotor 6F according to the sixth modified example of the first embodiment.

The shape of a connecting part 623F in a first magnetic body 61aF of the rotor 6F according to the sixth modified example of the first embodiment is identical to the shape of the connecting part 623D according to the fifth modified example. In addition, the shape of a connecting part 623F in a second magnetic body 61bF of the rotor 6F according to the sixth modified example is identical to the shape of the connecting part 623D according to the fifth modified example.

Moreover, the shape of a magnetic pole piece 622F in the first magnetic body 61 aF of the rotor 6F according to the sixth modified example is identical to the shape of the magnetic pole piece 622B according to the second modified example. In addition, the shape of a magnetic pole piece 622F in the second magnetic body 61bF of the rotor 6F according to the sixth modified example is identical to the shape of the magnetic pole piece 622B according to the second modified example. Therefore, in the configuration of the rotor 6F according to the sixth modified example of the first embodiment, differences from the configurations of the above-described rotors 6, 6B, and 6D are described below, and the same components are denoted by the same signs and are not described.

A plurality of magnetic pole pieces 622F include a bridge part 622d between two adjacent magnetic pole pieces 622F in the circumferential direction C and connecting these two magnetic pole pieces 622F. In addition, the magnetic pole piece 622F adjacent in the circumferential direction C to the magnetic pole piece 622F provided with the bridge part 622d is provided with a protruding part 622p. That is, the bridge part 622d and the protruding part 622p are alternately arranged at two adjacent magnetic pole pieces 622F in the circumferential direction C in the plurality of magnetic pole pieces 622F.

The bridge part 622d is opposed to an outer peripheral surface 621o of an annular part 621 in the radial direction R. In addition, in the circumferential direction C, a part of the outer peripheral surface 621o of the annular part 621 is located between two connecting parts 623F connecting the annular part 621 and two adjacent magnetic pole pieces 622F, and these two adjacent magnetic pole pieces 622F are connected to the bridge part 622d.

In addition, in the first magnetic body 61aF and the second magnetic body 61bF, the connecting part 623F of the first magnetic body 61aF and the connecting part 623F of the second magnetic body 61bF are arranged at different positions in the circumferential direction C.

Therefore, the rotor core 60E according to the present modified example is formed in a substantially cylindrical shape by the bridge part 622d, so that the strength of the rotor core 60E can be improved.

Seventh Modified Example of First Embodiment

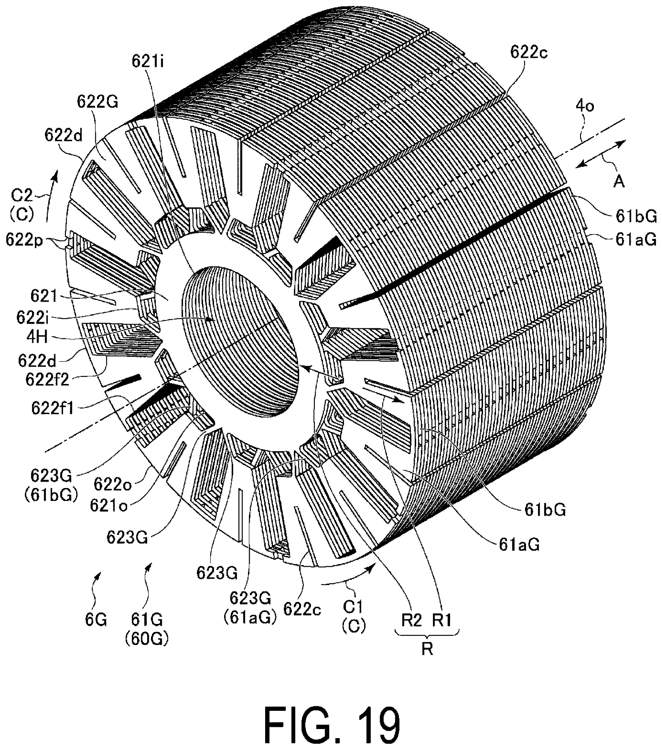

A rotor 6G and the like according to the seventh modified example of the first embodiment are described with reference to FIG. 19. FIG. 19 is a perspective view of a rotor core 60G included in the rotor 6G according to the seventh modified example of the first embodiment.

The shape of a connecting part 623G in a first magnetic body 61aG of the rotor 6G according to the seventh modified example of the first embodiment is identical to the shape of the connecting part 623D according to the fifth modified example. In addition, the shape of a connecting part 623G in a second magnetic body 61bF of the rotor 6F according to the seventh modified example is identical to the shape of the connecting part 623D according to the fifth modified example.

Moreover, the shape of a magnetic pole piece 622G in the first magnetic body 61aG of the rotor 6G according to the seventh modified example is identical to the shape of the magnetic pole piece 622B according to the second modified example. In addition, the shape of a magnetic pole piece 622G in the second magnetic body 61bG of the rotor 6G according to the seventh modified example is identical to the shape of the magnetic pole piece 622B according to the second modified example. Therefore, in the configuration of the rotor 6G according to the seventh modified example of the first embodiment, differences from the configurations of the above-described rotors 6, 6B, and 6D are described below, and the same components are denoted by the same signs and are not described.

A plurality of magnetic pole pieces 622G include a bridge part 622d between two adjacent magnetic pole pieces 622G in the circumferential direction C and connecting these two magnetic pole pieces 622G. In addition, the magnetic pole piece 622G adjacent in the circumferential direction C to the magnetic pole piece 622G provided with the bridge part 622d is provided with a protruding part 622p. That is, the bridge part 622d and the protruding part 622p are alternately arranged at two adjacent magnetic pole pieces 622G in the circumferential direction C in the plurality of magnetic pole pieces 622G.

The bridge part 622d is arranged in an opposed state to the two connecting parts 623G having a branched shape in the radial direction R.

In addition, in the first magnetic body 61aG and the second magnetic body 61bG, the connecting part 623G of the first magnetic body 61 aG and the connecting part 623G of the second magnetic body 61bG are arranged at different positions in the circumferential direction C.

Therefore, the rotor core 60G according to the present modified example is formed in a substantially cylindrical shape by the bridge part 622d, so that the strength of the rotor core 60G can be improved.

Second Embodiment

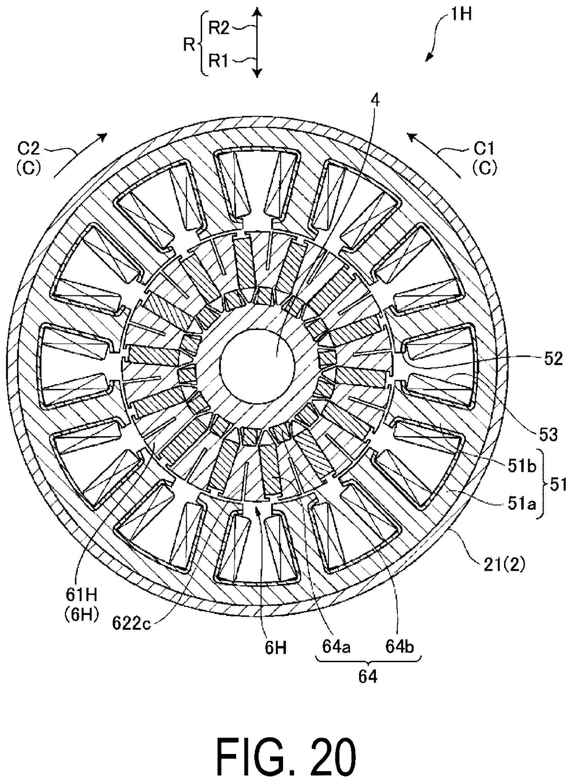

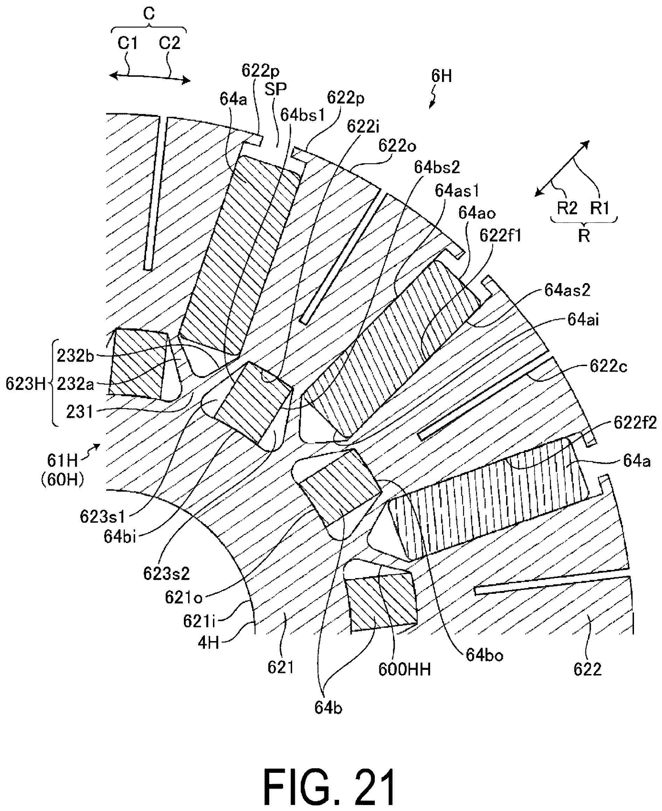

A motor 1H using a rotor 6H according to a second embodiment is described below with reference to FIGS. 20 and 21. FIG. 20 is a horizontal cross-sectional view of the motor 1H using the rotor 6H according to the second embodiment. FIG. 21 is an enlarged cross-sectional view of a part of the rotor 6H illustrated in FIG. 20. Note that in FIG. 20, × located at both sides of the teeth 51b indicates omission of a winding wound around the teeth 51b and forming the coils 53.

The configuration of a magnetic body 61H of the rotor 6H according to the second embodiment is different from the configuration of the magnetic body 61 of the rotor 6 according to the first embodiment. Therefore, in the configuration of the rotor 6H according to the second embodiment, differences from the configuration of the rotor 6 according to the first embodiment are described below, and the same components are denoted by the same signs and are not described.

As illustrated in FIG. 20, the motor 1H according to the present embodiment includes the housing 2, bearings (not illustrated), the shaft 4, the stator 5, and the rotor 6H. The rotor 6H includes a rotor core 60HA and a plurality of magnets 64.

The rotor core 60HA is formed by layering magnetic bodies 61 having the same shape in the axial direction A.

The magnetic body 61 includes an annular part 621, a magnetic pole piece 622, and a connecting part 623H connecting the annular part 621 and the magnetic pole piece 622.

The connecting part 623 includes a first part 231 extending from an outer peripheral surface 321o of the annular part 621 along the radial direction R, and a second part 232a and a third part 232b bifurcating from a distal end of the first part 231 and connected to an inner peripheral surface 622i of two different magnetic pole pieces 622. The connecting part 623 having such a configuration has a Y shape when viewed from the axial direction A.

As described above, the plurality of magnetic bodies 61 are layered in the axial direction A. Therefore, each part of the rotor core 60H illustrated in FIG. 21 is formed by each part of the magnetic body 61.

As illustrated in FIG. 21, the rotor core 60H has a hole 600HH formed by two adjacent connecting parts 623H in the circumferential direction C, an outer peripheral surface 621o of the annular part 621, and the inner peripheral surface 622i of the magnetic pole piece 622. The second magnet 64b is inserted into the hole 600HH.

In the circumferential direction C of the rotor 6H according to the present embodiment, a first gap 623s1 is formed between an inner peripheral surface of the hole 600HH and one lateral surface 64bs1 of the second magnet 64b, and a second gap 623s2 is formed between the inner peripheral surface of the hole 600HH and the other lateral surface 64bs2 of the second magnet 64b. Air present in the first gap 623s1 and the second gap 623s2 serves as the flux barrier described above.

Third Embodiment

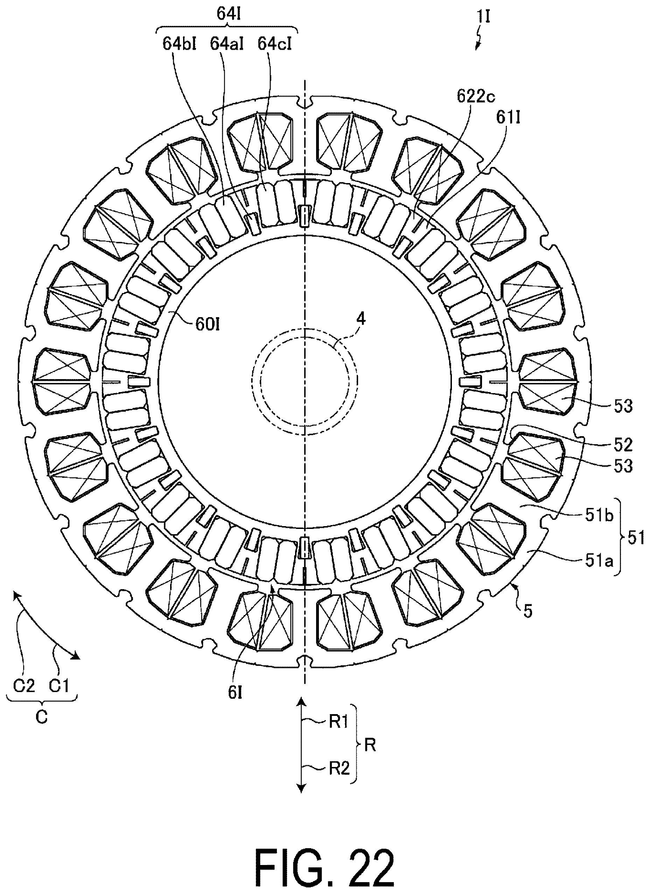

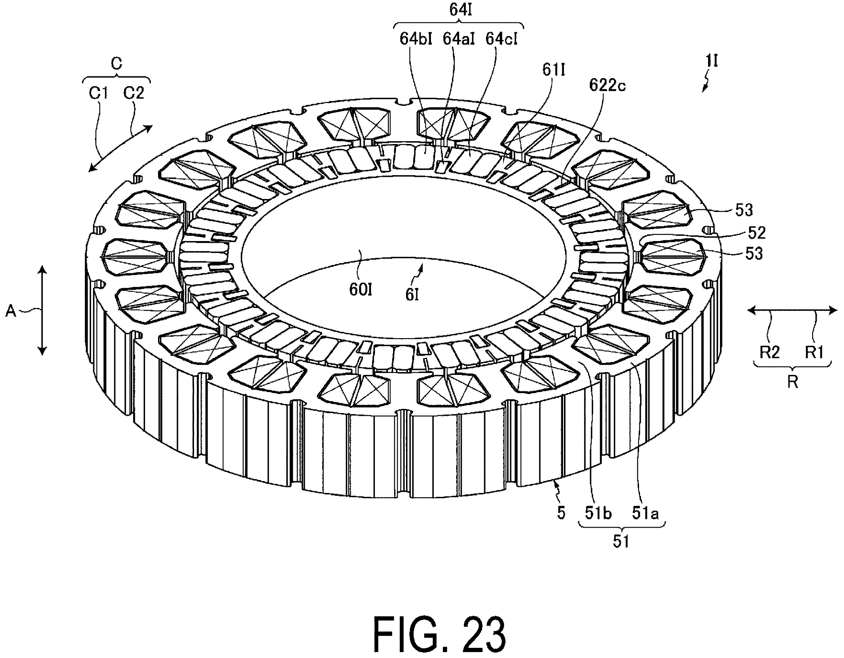

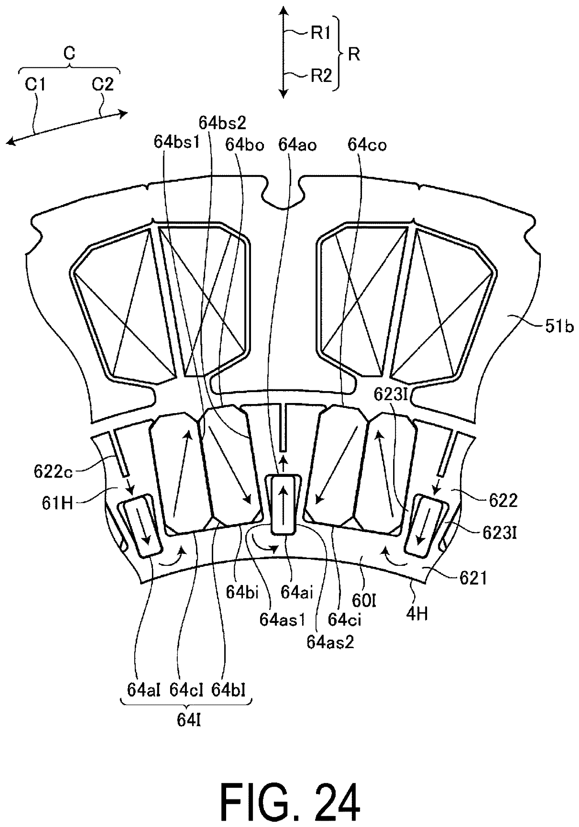

A motor 1I using a rotor 6I according to a third embodiment is described below with reference to FIGS. 22, 23, and 24. FIG. 22 is a plan view of the motor 1I using the rotor 6I according to the third embodiment. FIG. 23 is a perspective view of the motor 1I illustrated in FIG. 22. FIG. 24 is an exploded plan view illustrating a part of the rotor 6I and the stator 5 illustrated in FIG. 22. Note that in FIGS. 22, 23, and 24, × located at both sides of the teeth 51b indicates omission of a winding wound around the teeth 51b and forming the coils 53.

The configuration and the like of a magnet 64I of the rotor 6I according to the third embodiment are different from the configuration and the like of the magnet 64 of the rotor 6 according to the first embodiment. Therefore, in the configuration and the like of the magnet 64I of the rotor 6I according to the third embodiment, differences from the configuration and the like of the magnet 64 of the rotor 6 according to the first embodiment are described below, and the same components are denoted by the same signs and are not described. The motor 1I according to the present embodiment is what is called a Halbach array motor including a plurality of magnets 64I having different directions of magnetic fluxes and arranged on a surface (outer peripheral surface) of a rotor core 60I.

As illustrated in FIG. 22, the motor 1I according to the present embodiment includes a housing (not illustrated), bearings (not illustrated), the shaft 4, the stator 5, and the rotor 61.

As illustrated in FIGS. 22 and 23, the rotor 6I includes the rotor core 60I and the plurality of magnets 641. The magnet 64I of the rotor 6 is described below.

The magnet 64 is formed with, for example, a permanent magnet. The rotor 6I according to the present embodiment includes a plurality of first magnets 64aI, a plurality of second magnets 64bI, and a plurality of third magnets 64cI. The first magnets 64aI are arranged along the circumferential direction C, for example. The second magnets 64bI are arranged along the circumferential direction C, for example. The third magnets 64cI are arranged along the circumferential direction C, for example. The plurality of magnets 64I include, for example, twenty first magnets 64aI, twenty second magnets 64bI, and the plurality of third magnets 64cI.

The first magnet 64aI is what is called a main magnet. The second magnet 64b and the third magnet 64c are what is called sub-magnets. In the rotor core 60I according to the present embodiment, the second magnet 64b is arranged at one side of the first magnet 64a in the circumferential direction C, and the third magnet 64c is arranged at the other side of the first magnet 64a in the circumferential direction C.

When viewed from the axial direction A, the first magnet 64aI illustrated in FIG. 24 includes an outer surface 64ao located at the stator side R1 in the radial direction R, an inner surface 64ai located at the opposite side R2 in the radial direction R, and a pair of lateral surfaces 64as1 and 64as2 opposed to each other in the circumferential direction C. In the first magnet 64aI, one of the outer surface 64ao and the inner surface 64ai is an N pole, and the other is an S pole.

When viewed from the axial direction A, the second magnet 64bI includes an outer surface 64bo located at the stator side R1 in the radial direction R, an inner surface 64bi located at the opposite side R2 in the radial direction R, and a pair of lateral surfaces 64bs1 and 64bs2 opposed to each other in the circumferential direction C. In the second magnet 64bI, one of the outer surface 64bo and the inner surface 64bi is an N pole, and the other is an S pole.

When viewed from the axial direction A, the third magnet 64cI includes an outer surface 64co located at the stator side R1 in the radial direction R, an inner surface 64ci located at the opposite side R2 in the radial direction R, and a pair of lateral surfaces 64cs1 and 64cs2 opposed to each other in the circumferential direction C. In the third magnet 64cI, one of the outer surface 64co and the inner surface 64ci is an N pole, and the other is an S pole.

In the second magnet 64bI and the third magnet 64c in contact with each other in the circumferential direction C, when one of the outer surfaces 64bo and 64co is an N pole, the other of the outer surface 64bo and the 64co is an S pole. In a state where the teeth 51b and the magnetic pole piece 622 are opposed to each other in the radial direction R, the directions of magnetic forces generated by the first magnet 64aI, the second magnet 64bI, and the third magnet 64cI are, for example, as indicated by arrows illustrated in FIG. 24.

The rotor core 601A is formed by layering magnetic bodies 61 having the same shape in the axial direction A.

The magnetic body 61 includes an annular part 621, a magnetic pole piece 622, and a connecting part 623I connecting the annular part 621 and the magnetic pole piece 622.

The outer peripheral surface 622o of the magnetic pole piece 622 extending in the circumferential direction C is a lateral surface when viewed from the stator side R1 in the radial direction R, and has a recessed part 622c extending in the radial direction R.

Two connecting parts 623I are provided for one magnetic pole piece 622, and are arranged at both sides of the first magnet 62aI in the circumferential direction C.

The plurality of magnetic bodies 61 are layered in the axial direction A. Therefore, each part of the rotor core 60I illustrated in FIG. 21 is formed by a plurality of parts of the magnetic body 61.

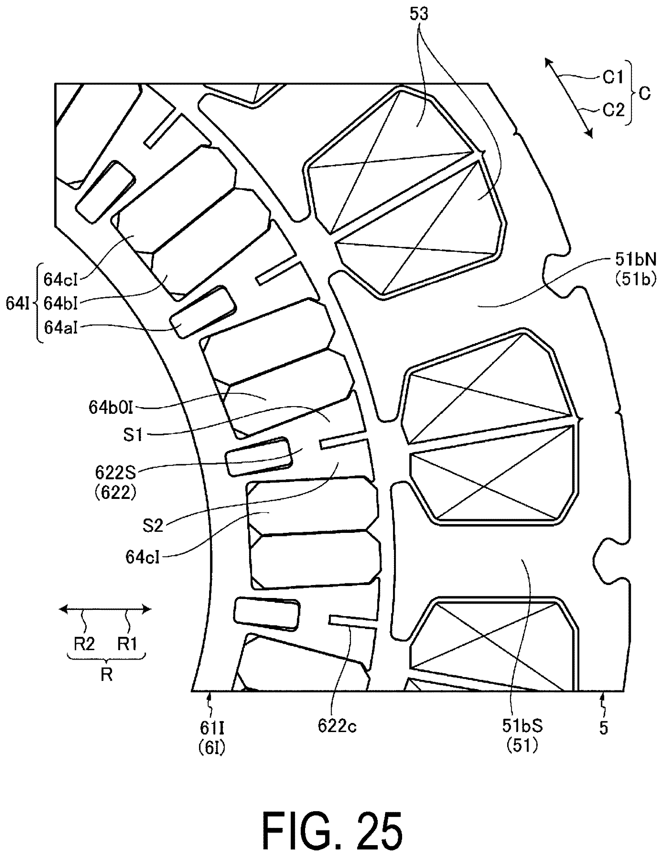

The operation and effect of the recessed part 622c of the rotor core 60I according to the present embodiment are described below with reference to FIG. 25. FIG. 25 is a cross-sectional view illustrating a part of the rotor 6I and a part of the stator 5 illustrated in FIG. 22.

In FIG. 25, in a magnetic pole piece denoted by reference sign 622S, a part S1 of the magnetic pole piece 622S located at the rotation direction C1 side with respect to the recessed part 622c is opposed to teeth denoted by reference sign 51bN in the radial direction R.

In addition, a second magnet in contact with the magnetic pole piece 622S and located at the rotation direction C1 side with respect to the magnetic pole piece 622S is denoted by reference sign 64b0I. The second magnet 64b0I is opposed to the teeth 51bn in the radial direction R. Therefore, a large number of magnetic lines of force are formed at the part S1 of the magnetic pole piece 622S and the teeth 51bn, and the magnetic force of the part S1 and the teeth 51bn is large.

On the other hand, in FIG. 25, in the magnetic pole piece 622S, a part S2 of the magnetic pole piece 622S located at the reverse rotation direction C2 side with respect to the recessed part 622c is opposed to the coils 53 between two adjacent teeth 51b, and is in a non-opposed state to the teeth 51bn.

In addition, the part S2 of the magnetic pole piece 622S is located at the reverse rotation direction C2 side with respect to the teeth 51bn, is opposed to the coils 53 between two adjacent teeth 51b, and is in a non-opposed state to teeth denoted by reference sign 51bS.

Moreover, the recessed part 622c is located between the second magnet 64b0I and the teeth 51bS, and air is present in the recessed part 622c. The air is a nonmagnetic material, and the magnetic permeability of the air is smaller than the magnetic permeability of the magnetic material forming the rotor core 60.

Therefore, the magnetic force generated at the part S2 of the magnetic pole piece 622S located between the second magnet 64b0I and the teeth 51bS has a smaller number of magnetic lines of force than the part S1 of the magnetic pole piece 622S described above due to the recessed part 622c. That is, the magnetic force of the part S2 of the magnetic pole piece 622S is weaker than the magnetic force of the part S1 of the magnetic pole piece 622S.

For the same reason, the magnetic force of the part S2 of the magnetic pole piece 622S generated by the third magnet 64cI located at the reverse rotation direction C2 side and the teeth 51bN with respect to the second magnet 64b0I is weaker than the magnetic force of the part S1 of the magnetic pole piece 622S. Accordingly, in the rotor 6I, a magnetic force of a part of the magnetic pole piece 622 opposed to the teeth 51b in the radial direction R is large, and compared to the magnetic force, a magnetic force of a part of the magnetic pole piece 622 in a non-opposed state to the teeth 51b is smaller. As a result, the rotor 6I can be restrained from being pulled by the teeth 51b in a non-opposed state at the rotation direction C1 side, and can be restrained from being pulled by the teeth 51b in a non-opposed state at the reverse rotation direction C2 side, so that a cogging torque can be suppressed.

As described above, the rotor 6I according to the present embodiment includes a plurality of magnets 64I arranged in the circumferential direction C and a plurality of magnetic pole pieces 622, and in the circumferential direction C, a magnetic pole piece 622 is in contact with two adjacent magnets 64I among the plurality of magnets 64I, and the outer peripheral surface (lateral surface) 622o of the magnetic pole piece 622 extending in the circumferential direction C includes the recessed part 622c extending in the radial direction R. Therefore, the rotor 6I according to the present embodiment can suppress a cogging torque.

First modified example of Third Embodiment

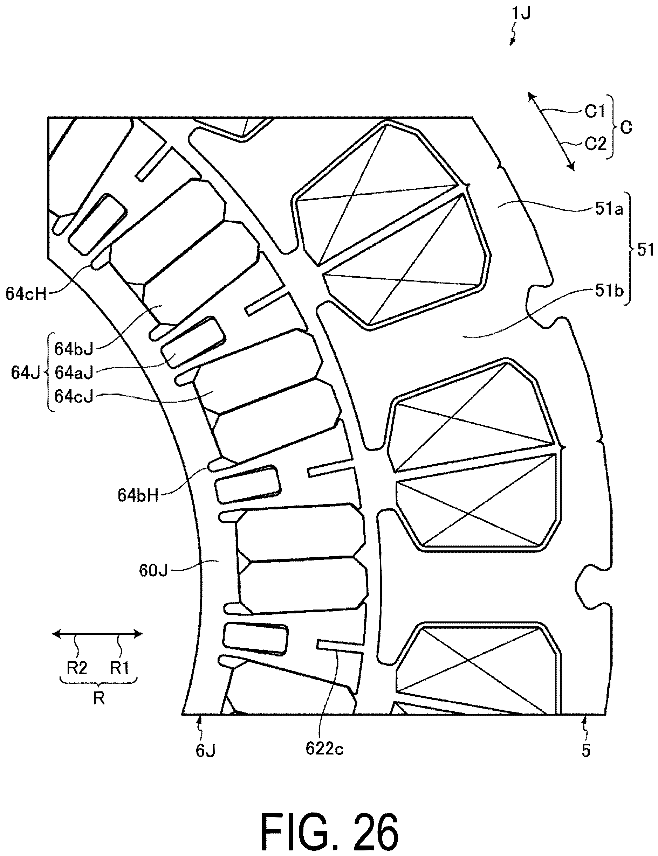

A rotor 6J according to a first modified example of the third embodiment is described with reference to FIG. 26. FIG. 26 is plan view of a part of a motor 1J using the rotor 6J according to the first modified example of the third embodiment.

In the rotor 6J according to the first modified example of the third embodiment, when viewed from the axial direction A, a first gap 64bh is formed at the opposite side R2 of a second magnet 64bJ in the radial direction R. The first gap 64bh is opposed to a lateral surface 64as1 of a first magnet 64a in the circumferential direction C.

Air is present in the first gap 64bh. Therefore, the air present in the first gap 64bh serves as a flux barrier for suppressing magnetic fluxes directed from the lateral surface 64as1 of the first magnet 64aJ toward a second magnet 64bJ in the circumferential direction C.

In addition, in the rotor 6J, when viewed from the axial direction A, a second gap 64ch is formed at the opposite side R2 of a third magnet 64cJ in the radial direction R. The second gap 64ch is adjacent to a lateral surface 64as2 of the first magnet 64aJ in the circumferential direction C.

Air is present in the second gap 64ch. Therefore, the air present in the second gap 64ch serves as a flux barrier for suppressing magnetic fluxes directed from the lateral surface 64as2 of the first magnet 64aJ toward the third magnet 64cJ in the circumferential direction C.

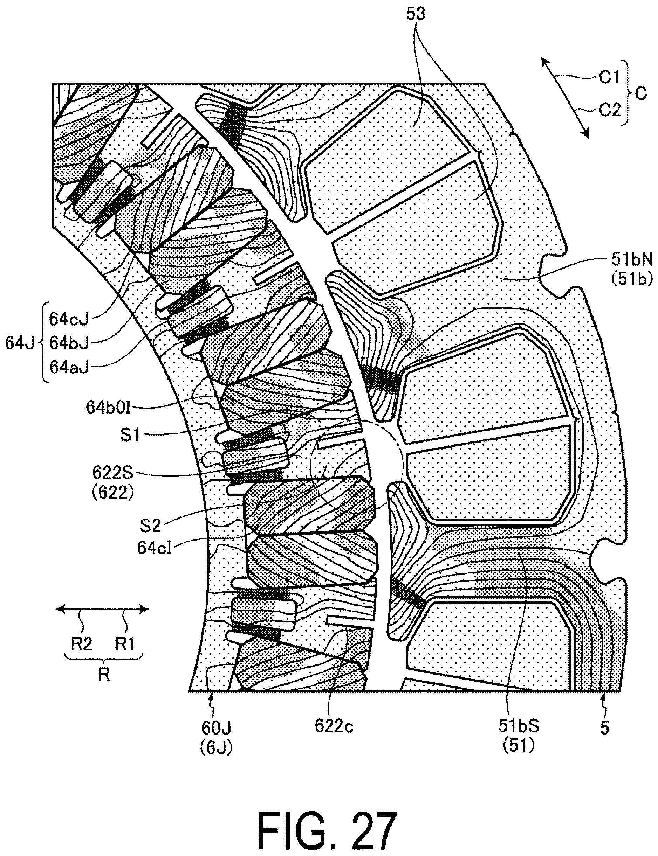

FIG. 27 is a cross-sectional view illustrating the same parts as the parts in FIG. 26, and is a plan view illustrating magnetic lines of force of each part.

In FIG. 27, in a magnetic pole piece denoted by reference sign 622S, a part S1 of the magnetic pole piece 622S located at the rotation direction C1 side with respect to a recessed part 622c is opposed to teeth denoted by reference sign 51bN in the radial direction R.

In addition, a second magnet in contact with the magnetic pole piece 622S and located at the rotation direction C1 side with respect to the magnetic pole piece 622S is denoted by reference sign 64b01. The second magnet 64b0I is opposed to the teeth 51bn in the radial direction R.

Therefore, a large number of magnetic lines of force are formed at the part S1 of the magnetic pole piece 622S and the teeth 51bn, and the magnetic force of the part S1 and the teeth 51bn is large.

On the other hand, in FIG. 27, in the magnetic pole piece 622S, a part S2 of the magnetic pole piece 622S located at the reverse rotation direction C2 side with respect to the recessed part 622c is in a non-opposed state to the teeth 51bn.

In addition, the part S2 of the magnetic pole piece 622S is located at the reverse rotation direction C2 side with respect to the teeth 51bn, and is in a non-opposed state to teeth denoted by reference sign 51bS.

Moreover, the recessed part 622c is located between the second magnet 64b0I and the teeth 51bS, and air is present in the recessed part 622c. The air is a nonmagnetic material, and the magnetic permeability of the air is smaller than the magnetic permeability of the magnetic material forming the rotor core 60.

Therefore, the magnetic force generated at the part S2 of the magnetic pole piece 622S located between the second magnet 64b0I and the teeth 51bS has a smaller number of magnetic lines of force than the part S1 of the magnetic pole piece 622S described above due to the recessed part 622c (part having a small number of characteristics of magnetic force is indicated by O in FIG. 27). That is, the magnetic force of the part S2 of the magnetic pole piece 622S is weaker than the magnetic force of the part S1 of the magnetic pole piece 622S.

For the same reason, the magnetic force of the part S2 of the magnetic pole piece 622S generated by the third magnet 64c0I located at the reverse rotation direction C2 side and the teeth 51bN with respect to the second magnet 64b0I is weaker than the magnetic force of the part S1 of the magnetic pole piece 622S. Accordingly, in the rotor 6J, a magnetic force of a part of the magnetic pole piece 622 opposed to the teeth 51b in the radial direction R is large, and compared to the magnetic force, a magnetic force of a part of the magnetic pole piece 622 in a non-opposed state to the teeth 51b is smaller. As a result, the rotor 6J can be restrained from being pulled by the teeth 51b in a non-opposed state at the rotation direction C1 side, and can be restrained from being pulled by the teeth 51b in a non-opposed state at the reverse rotation direction C2 side, so that a cogging torque can be suppressed.

As described above, the rotor 6J according to the present modified example includes a plurality of magnets 64J arranged in the circumferential direction C and a plurality of magnetic pole pieces 622, and in the circumferential direction C, a magnetic pole piece 622 is in contact with two adjacent magnets 64J among the plurality of magnets 64J and the outer peripheral surface (lateral surface) 622o of the magnetic pole piece 622 extending in the circumferential direction C includes the recessed part 622c extending in the radial direction R. Therefore, the rotor 6J according to the present embodiment can suppress a cogging torque.

Second Modified Example of Third Embodiment

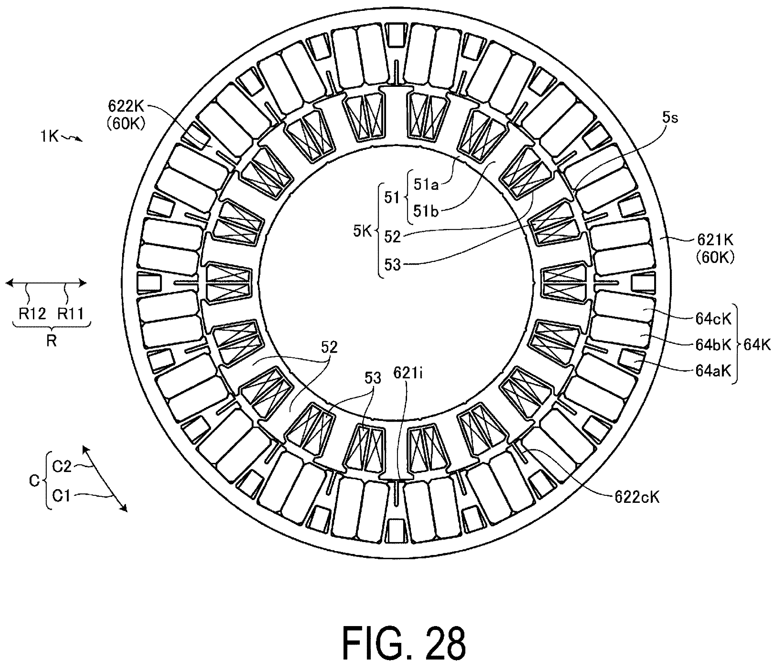

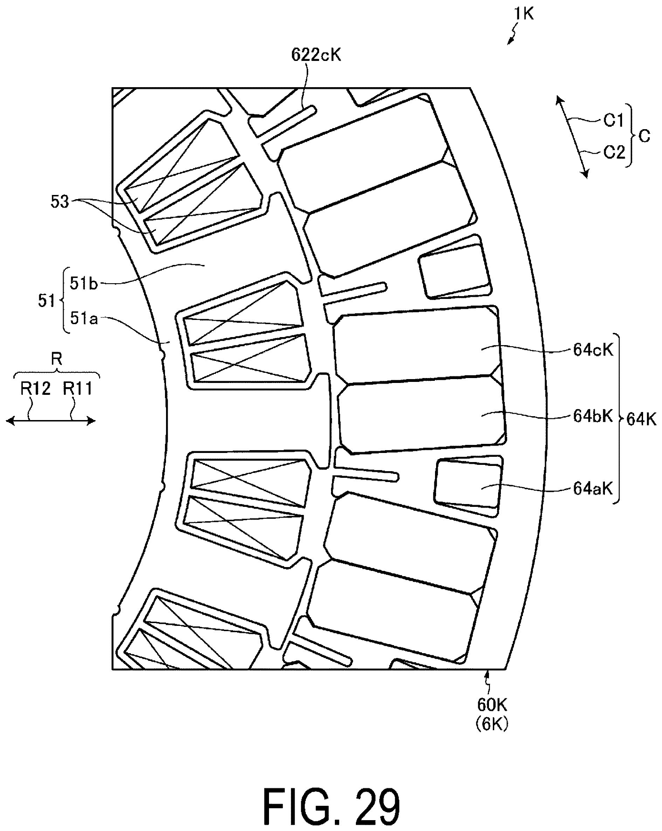

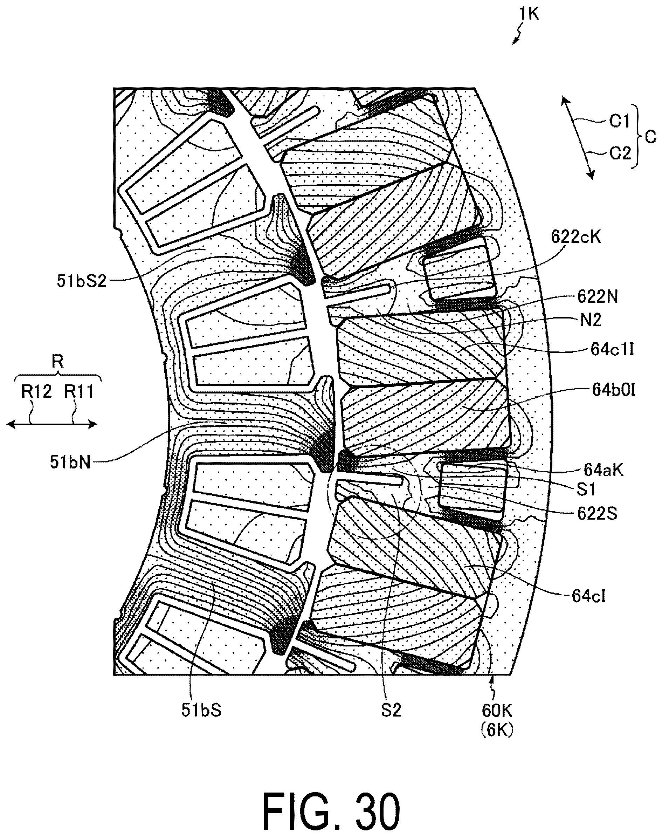

A rotor 6K and the like according to a second modified example of the third embodiment are described with reference to FIGS. 28, 29, and 30. FIG. 28 is a plan view of a motor 1K using the rotor 6K according to the second modified example of the third embodiment. FIG. 29 is a plan view illustrating a part of the motor 1K illustrated in FIG. 28. FIG. 30 is a plan view illustrating the same parts as the parts in FIG. 29, and is a plan view illustrating magnetic lines of force of each part. Note that in FIGS. 28 and 29, × located at both sides of the teeth 51b indicates omission of a winding wound around the teeth 51b and forming the coils 53.

In the motor 1K according to the second modified example of the third embodiment, when viewed from the axial direction A, a stator 5K is located inside the rotor 6K in the radial direction R with reference to the rotor 6K. That is, the motor 1K according to the second modified example of the third embodiment is an outer rotor type brushless motor. In addition, a shaft (not illustrated) is located inside the rotor 6K in the radial direction R. Therefore, in the motor 1K according to the present modified example, an inner side in the radial direction R is referred to as a stator side R11, an outer side in the radial direction R is referred to as an opposite side R12, and in FIGS. 28 to 30, a stator side in the radial direction R is indicated by R11, and an opposite side in the radial direction R is indicated by R12.

In a rotor core 60K according to the present modified example, an annular part 621K is provided at the opposite side R12 in the radial direction R, and a magnetic pole piece 622K is provided at the stator side R11 in the radial direction R.

A recessed part 622cK is formed at an inner peripheral surface (lateral surface) 621i of the annular part 621K of the rotor core 60 of the rotor 6K according to the present modified example. More specifically, the recessed part 622cK is formed at the annular part 621K. The recessed part 622cK is located inside a first magnet 64aK in the radial direction R (that is, the stator side R11 in the radial direction R). In addition, the recessed part 622cK is located between a second magnet 64bK and a third magnet 64cK adjacent to the first magnet 64aK in the circumferential direction C (for example, at the center of these magnets 64).

In FIG. 30, in a magnetic pole piece denoted by reference sign 622S, a part S1 of the magnetic pole piece 622S located at the rotation direction C1 side with respect to the recessed part 622cK is opposed to teeth denoted by reference sign 51bN in the radial direction R.

In addition, a second magnet in contact with the magnetic pole piece 622S and located at the rotation direction C1 side with respect to the magnetic pole piece 622S is denoted by reference sign 64b01. The second magnet 64b0I is opposed to the teeth 51bN in the radial direction R.

Therefore, a large number of magnetic lines of force are formed at the part S1 of the magnetic pole piece 622S and the teeth 51bn, and the magnetic force of the part S1 and the teeth 51bn is large.

On the other hand, in FIG. 30, at the part S1 of the magnetic pole piece 622S, the part S2 of the magnetic pole piece 622S located at the reverse rotation direction C2 side with respect to the recessed part 622cK is in a non-opposed state to the teeth 51bN.

In addition, the part S2 of the magnetic pole piece 622S is located at the reverse rotation direction C2 side of the teeth 51bN, and is in a non-opposed state to teeth denoted by reference sign 51bS.

Moreover, the recessed part 622cK is located between a first magnet and the teeth 51bN and air is present in the recessed part 622cK. The first magnet is located at the reverse rotation direction C2 side with respect to the second magnet 64b0I and denoted by reference sign 64aK. The air is a nonmagnetic material, and the magnetic permeability of the air is smaller than the magnetic permeability of a magnetic material forming the rotor core 60K.

Therefore, the magnetic force generated at the part S2 of the magnetic pole piece 622S has a smaller number of magnetic lines of force than the part S1 of the magnetic pole piece 622S described above due to the recessed part 622c (part having a small number of magnetic lines of force is indicated by O in FIG. 30). That is, the magnetic force of the part S2 of the magnetic pole piece 622S is weaker than the magnetic force of the part S1 of the magnetic pole piece 622S.

For the same reason, the magnetic force of a part N2 of a magnetic pole piece 622N generated by a third magnet 64c1I located at the rotation direction C1 side and teeth 51bS2 with respect to the second magnet 64b0I is weaker than the magnetic force of the part S1 of the magnetic pole piece 622S. Accordingly, in the rotor 6K, a magnetic force of a part of the magnetic pole piece 622 opposed to the teeth 51b in the radial direction R is large, and compared to the magnetic force, a magnetic force of a part of the magnetic pole piece 622 in a non-opposed state to the teeth 51b is smaller. As a result, the rotor 6K can be restrained from being pulled by the teeth 51b in a non-opposed state at the rotation direction C1 side, and can be restrained from being pulled by the teeth 51b in a non-opposed state at the reverse rotation direction C2 side, so that a cogging torque can be suppressed.

As described above, the rotor 6K according to the present modified example includes a plurality of magnets 64K arranged in the circumferential direction C and a plurality of magnetic pole pieces 622K, and in the circumferential direction C, a magnetic pole piece 622K is in contact with two adjacent magnets 64K among the plurality of magnets 64K, and the outer peripheral surface (lateral surface) 622o of the magnetic pole piece 622K extending in the circumferential direction C includes the recessed part 622cK extending in the radial direction R. Therefore, the rotor 6K according to the present modified example can suppress a cogging torque.

Although the description has been given based on the embodiments and the modified examples of the rotors 6, 6A, 6B, 6C, 6D, 6E, 6F, 6G, 6H, 6I, 6J, 6K, and the like, the present invention is not limited to the embodiments and the modified examples, and it goes without saying that various variations can be made without departing from the gist of the present invention. Configurations obtained by appropriately combining the constituent elements of the embodiments and the modified examples described above are also included in the present invention. Various variations without departing from such gist are also included in the technical scope of the present invention, and this is apparent to those skilled in the art from the description of the claims.

Reference Signs List

1, 1A, 1H, 1I, 1J, 1K Motor, 2 Housing, 4 Shaft, 5 Stator, 53 Coil, 6, 6A, 6B, 6C, 6D, 6E, 6F, 6G, 6H, 6I, 6J, 6K Rotor, 621, 621B, 621K Annular part, 622, 622B, 622F, 622G, 622K Magnetic pole piece, 622c, 622cK Recessed part, 622cL Length of recessed part, 622i Inner peripheral surface (inner surface), 622L Length of magnetic pole piece, 622o Outer peripheral surface (lateral surface), 64, 64I, 64J, 64K Magnet, 64a, 64aI, 64aJ, 64aK First magnet, 64b, 64bI, 64bJ, 64bK Second magnet, 100 Electronic apparatus, C Circumferential direction, R Radial direction

**Claims**

1. A rotor comprising:

   a plurality of magnets arranged in a circumferential direction; and
   a plurality of magnetic pole pieces,
   wherein, in the circumferential direction, the magnetic pole piece is in contact with two adjacent magnets of the plurality of magnets, and a lateral surface of the magnetic pole piece extending in the circumferential direction includes a recessed part extending in a radial direction.

2. The rotor according to claim 1, wherein a length of the recessed parts in the radial direction is one-third or more of a length of the magnetic pole pieces in the radial direction.

3. The rotor according to claim 1 or 2, comprising:

   an annular part; and
   the magnetic pole piece connected to the annular part via connecting parts.

4. The rotor according to claim 3, wherein a second magnet is arranged between the annular part and the magnetic pole piece in the radial direction.

5. The rotor according to claim 4, wherein the second magnet is in contact with an inner surface of the magnetic pole piece in the radial direction.

6. A motor comprising:

   the rotor according to claim 1 or 2;
   a shaft fixed to the rotor; and
   a stator including a coil and a magnetic body wound around with the coil.

7. An electronic apparatus comprising:

   the motor according to claim 6; and
   a housing accommodating the motor.

FIG. 1

FIG. 2

FIG. 3

FIG. 4

FIG. 5

FIG. 6

FIG. 7

FIG. 8

FIG. 9

EP 4 704 311 A1

FIG. 10

FIG. 11

# FIG. 12

EP 4 704 311 A1

FIG. 13

**FIG. 14**

FIG. 15

FIG. 16

FIG. 17

FIG. 18

FIG. 19

FIG. 20

FIG. 21

FIG. 22

FIG. 23

# FIG. 24

FIG. 25

FIG. 26

FIG. 27

FIG. 28

FIG. 29

FIG. 30

## INTERNATIONAL SEARCH REPORT

International application No.

**PCT/JP2024/005660**

| A. | CLASSIFICATION OF SUBJECT MATTER |
|---|---|

*H02K 1/278*(2022.01)i
FI: H02K1/278

According to International Patent Classification (IPC) or to both national classification and IPC

| B. | FIELDS SEARCHED |
|---|---|

Minimum documentation searched (classification system followed by classification symbols)

H02K1/278

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 6707726 B1 (MINEBEA MITSUMI INC.) 10 June 2020 (2020-06-10) paragraphs [0020], [0025]-[0027], [0029], fig. 1, 3 | 1-7 |
| Y | JP 2010-273442 A (ASMO CO., LTD.) 02 December 2010 (2010-12-02) paragraphs [0004], [0022]-[0023], fig. 1-2 | 1-7 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **27 March 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/005660**

| Patent document cited in search report | Publication date (day/month/year) | Patent family member(s) | Publication date (day/month/year) |
|---|---|---|---|
| JP 6707726 B1 | 10 June 2020 | US 2022/0037943 A1 paragraphs [0039], [0046]-[0049], [0051], fig. 1, 3 DE 112019005868 T5 CN 113169604 A | |
| JP 2010-273442 A | 02 December 2010 | US 2010/0308680 A1 paragraphs [0003], [0129], fig. 24-25 DE 102010020850 A1 CN 101895161 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004026089 A